# EUROPEAN PATENT APPLICATION

(11) **EP 4 572 358 A1**
(43) Date of publication of application: **18.06.2025**
(21) Application number: 22954672.6
(22) Date of filing: 12.08.2022
(51) Int. Cl.: H04W 12/06

(54) **NORTHBOUND APPLICATION PROGRAMMING INTERFACE (API) INVOKING METHOD AND APPARATUS**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2022/112324
(87) International publication number: WO 2024/031722

(57) **Abstract**

The present disclosure provides a northbound application programming interface (API) invoking method and apparatus. The method comprises: receiving an authorization request message that is sent by a common API framework (CAPIF) verification and authorization function and that requests acquisition of a specified authorization (101), the specified authorization being an authorization corresponding to a target resource of UE; on the basis of the authorization request message, determining whether to allow an API invoker to acquire the target resource (102); and sending an authorization response message to the CAPIF verification and authorization function (103), the authorization response message being used to indicate whether the UE agrees to provide the specified authorization for the API invoker. According to the present disclosure, the API invoker can acquire a target resource of a target resource owner on the basis of a user authorization, achieving the purpose of enabling the user authorization in the API invoking process, and usability is high.

## Description

### TECHNICAL FIELD

The present disclosure relates to the field of communications, and in particular to a method and apparatus for invoking a northbound application programming interface (API).

### BACKGROUND

One of the goals of the security study (SNAAPP security) of application-enabling aspects of subscriber-aware northbound API access (SNA) is to obtain authorization from the resource owner. Current regulations allow the UE to provide consent and/or revoke consent for information (e.g., location, presence) to be shared with third parties. In addition, in the SNA scenario, the Application Program Interface (API) invoker can request consent to get or set a terminal's resources (e.g., location, presence). However, in the API invoking scenario, there is no existing mechanism that allows the terminal to authorize the API invoker to get or set its resources.

### SUMMARY

In order to overcome the problems existing in the related art, the embodiments of the present disclosure provide a northbound application programming interface (API) invoking method and apparatus.

According to a first aspect of an embodiment of the present disclosure, a northbound application program interface (API) invoking method is provided, the method being executed by a user equipment (UE), and including:
receiving an authorization request message sent by a common API framework (CAPIF) authentication and authorization function for requesting a specified authorization; wherein the specified authorization is an authorization corresponding to a target resource of the UE;
determining whether to allow an API invoker to obtain the target resource according to the authorization request message; and
sending an authorization response message to the CAPIF authentication and authorization function; wherein the authorization response message is used to indicate whether the UE agrees to provide the specified authorization for the API invoker.

According to a second aspect of an embodiment of the present disclosure, a northbound application program interface (API) invoking method is provided, the method being executed by an API invoker and including:
sending an authorization request message to a common API framework (CAPIF) authentication and authorization function for requesting a specified authorization; wherein the specified authorization is an authorization corresponding to a target resource of a user equipment (UE);
receiving an authorization response message returned by the CAPIF authentication and authorization function; wherein the authorization response message is used to indicate whether the UE agrees to provide the specified authorization for the API invoker;
sending, in response to the authorization response message indicating that the UE agrees to provide the specified authorization for the API invoker, a service API invoke request message carrying at least a token to an API exposing function (AEF); wherein the token is used to obtain, modify or set the target resource; and
receiving a service API invoke response message returned by the AEF; wherein the target resource is carried by the service API invoke response message.

According to a third aspect of an embodiment of the present disclosure, a northbound application program interface (API) invoking method is provided, the method being executed by an API exposing function entity (AEF), and including:
receiving a service API invoke request message sent by an API invoker;
determining, in response to a token being carried by the service API invoke request message, a verification result of verifying the token; wherein the token is used to obtain, modify or set a target resource; and
sending, in response to the verification result indicating that the token is valid, a service API invoke response message to the API invoker; wherein the target resource is carried in the service API invoke response message.

According to a fourth aspect of an embodiment of the present disclosure, a northbound application program interface (API) invoking method is provided, the method being executed by a common API framework (CAPIF) authentication and authorization function, and including:
receiving an authorization request message sent by an API invoker requesting to obtain a specified authorization; wherein the specified authorization is an authorization corresponding to a target resource of a user equipment (UE);
sending the authorization request message to the UE;
receiving an authorization response message returned by the UE; wherein the authorization response message is used to indicate whether the UE agrees to provide the specified authorization for the API invoker; and
sending the authorization response message to the API invoker.

According to a fifth aspect of an embodiment of the present disclosure, a northbound application program interface (API) invoking apparatus is provided, the apparatus being applied to a user equipment (UE), and including:
a first receiving module, configured to receive an authorization request message sent by a common API framework (CAPIF) authentication and authorization function for requesting a specified authorization; wherein the specified authorization is an authorization corresponding to a target resource of the UE;
a first determining module, configured to determine whether to allow an API invoker to obtain the target resource according to the authorization request message; and
a first sending module, configured to send an authorization response message to the CAPIF authentication and authorization function; wherein the authorization response message is used to indicate whether the UE agrees to provide the specified authorization for the API invoker.

According to a sixth aspect of an embodiment of the present disclosure, a northbound application program interface (API) invoking apparatus is provided, the apparatus being applied to an API invoker, and including:
a second sending module, configured to send an authorization request message to a common API framework (CAPIF) authentication and authorization function for requesting a specified authorization; wherein the specified authorization is an authorization corresponding to a target resource of a user equipment (UE);
a second receiving module, configured to receive an authorization response message returned by the CAPIF authentication and authorization function; wherein the authorization response message is used to indicate whether the UE agrees to provide the specified authorization for the API invoker;
a third sending module, configured to send, in response to the authorization response message indicating that the UE agrees to provide the specified authorization for the API invoker, a service API invoke request message carrying at least a token to an API exposing function (AEF); wherein the token is used to obtain, modify or set the target resource; and
a third receiving module, configured to receive a service API invoke response message returned by the AEF; wherein the target resource is carried by the service API invoke response message.

According to a seventh aspect of an embodiment of the present disclosure, a northbound application program interface (API) invoking apparatus is provided, the apparatus being applied to an API exposing function entity (AEF), and including:
a fourth receiving module, configured to receive, a service API invoke request message sent by an API invoker;
a second determining module, configured to determine, in response to a token being carried by the service API invoke request message, a verification result of verifying the token; wherein the token is used to obtain a target resource; and
a fourth sending module, configured to send, in response to the verification result indicating that the token is valid and information in the service API invoke request message matches information in the token, a service API invoke response message to the API invoker; wherein the target resource is carried in the service API invoke response message.

According to an eighth aspect of an embodiment of the present disclosure, a northbound application program interface (API) invoking apparatus is provided, the apparatus being applied to a common API framework (CAPIF) authentication and authorization function, and including:
a fifth receiving module, configured to receive an authorization request message sent by an API invoker requesting to obtain a specified authorization; wherein the specified authorization is an authorization corresponding to a target resource of a user equipment (UE);
a fifth sending module, configured to send the authorization request message to the UE;
a sixth receiving module, configured to receive an authorization response message returned by the UE; wherein the authorization response message is used to indicate whether the UE agrees to provide the specified authorization for the API invoker; and
a sixth sending module, configured to send the authorization response message to the API invoker.

According to a ninth aspect of an embodiment of the present disclosure, a northbound application program interface (API) invoking apparatus is provided, the apparatus including:
a processor; and
a memory for storing processor-executable instructions;
wherein, the processor is configured to execute any one of the northbound application program interface (API) invoking method at the UE side.

According to a tenth aspect of an embodiment of the present disclosure, a northbound application program interface (API) invoking apparatus is provided, the apparatus including:
a processor; and
a memory for storing processor-executable instructions;
wherein, the processor is configured to execute any one of the northbound application program interface (API) invoking method at the API invoker side.

According to an eleventh aspect of an embodiment of the present disclosure, a northbound application program interface (API) invoking apparatus is provided, the apparatus including:
a processor; and
a memory for storing processor-executable instructions;
wherein, the processor is configured to execute any one of the northbound application program interface (API) invoking method at the AEF side.

According to a twelfth aspect of an embodiment of the present disclosure, a northbound application program interface (API) invoking apparatus is provided, the apparatus including:
a processor; and
a memory for storing processor-executable instructions;
wherein, the processor is configured to execute any one of the northbound application program interface (API) invoking method at the CAPIF authentication and authorization function side.

The technical solution provided by the embodiments of the present disclosure may have the following beneficial effects:

In the present disclosure, an API invoker can obtain a target resource of a target resource owner based on user authorization, thereby achieving the purpose of enabling user authorization during an API invoking and having high usability.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a flowchart of a method for invoking a northbound application programming interface (API) according to an exemplary embodiment.
FIG. 2 is a flowchart of a method for invoking a northbound application programming interface (API) according to another exemplary embodiment.
FIG. 3 is a flowchart of a method for invoking a northbound application programming interface (API) according to another exemplary embodiment.
FIG. 4 is a flowchart of a method for invoking a northbound application programming interface (API) according to another exemplary embodiment.
FIG. 5 is a flowchart of a method for invoking a northbound application programming interface (API) according to another exemplary embodiment.
FIG. 6 is a block diagram of an apparatus for invoking a northbound application program interface (API) according to an exemplary embodiment.
FIG. 7 is a block diagram of an apparatus for invoking a northbound application program interface (API) according to another exemplary embodiment.
FIG. 8 is a block diagram of an apparatus for invoking a northbound application program interface (API) according to another exemplary embodiment.
FIG. 9 is a block diagram of an apparatus for invoking a northbound application program interface (API) according to another exemplary embodiment.
FIG. 10 is a schematic structural diagram of an apparatus for invoking a northbound application program interface (API) according to an exemplary embodiment.
FIG. 11 is a schematic structural diagram of an apparatus for invoking a northbound application program interface (API) according to another exemplary embodiment.
FIG. 12 is a schematic structural diagram of an apparatus for invoking a northbound application program interface (API) according to another exemplary embodiment.
FIG. 13 is a schematic structural diagram of an apparatus for invoking a northbound application program interface (API) according to another exemplary embodiment.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The embodiments described in the following exemplary embodiments do not represent all embodiments consistent with the present invention. Instead, they are merely examples of devices and methods consistent with some aspects of the present invention as detailed in the appended claims.

The terms used in this disclosure are for the purpose of describing specific embodiments only and are not intended to limit the disclosure. The singular forms of "a", "said" and "the" used in this disclosure and the appended claims are also intended to include plural forms unless the context clearly indicates otherwise. It should also be understood that the term "and/or" used herein refers to and includes any or all possible combinations of at least one associated listed item.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the term "in response to" as used herein may be interpreted as "at the time of" or "when" or "in response to determining".

In the present disclosure, it can be assumed that the user equipment (UE) is the target resource owner, and the API invoker is the UE or application function (AF) in the SNA scenario. The API invoker obtains the target resource of the target resource owner based on user authorization, wherein the API invoker is the target resource owner.

In the embodiment of the present disclosure, the northbound API invoking method refers to an API invoking method provided for an API invoker to invoke a target resource of a target resource owner.

Hereinafter, the northbound API invoking method provided by the present disclosure is introduced from the UE side.

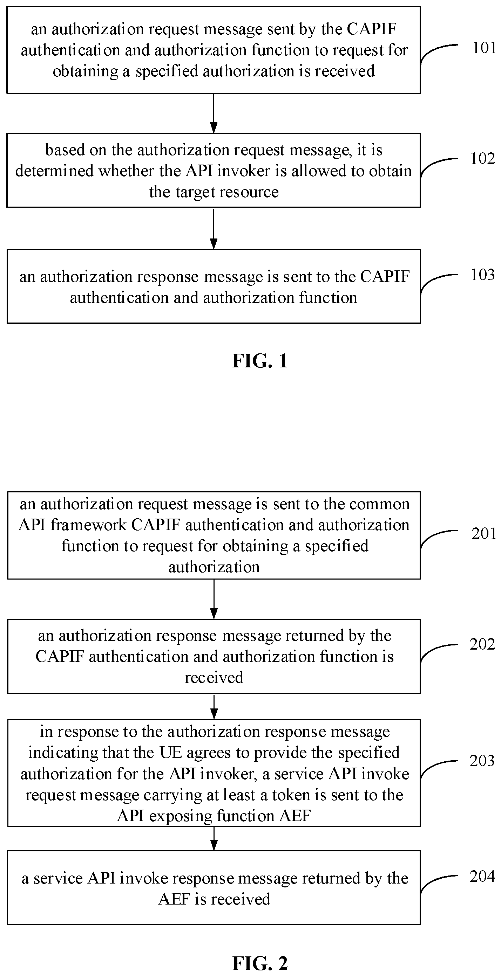

The present disclosure provides a northbound API invoking method, as shown in FIG. 1, which is a flow chart of a northbound API invoking method according to an embodiment, which can be executed by a UE, where the UE is the target resource owner. The method may include the following steps:

In step 101, an authorization request message sent by the CAPIF authentication and authorization function to request for obtaining a specified authorization is received.

In the embodiment of the present disclosure, the specified authorization is the authorization corresponding to the target resource of the UE. The authorization request message is sent by the API invoker to the CAPIF authentication and authorization function, which is then forwarded to the UE.

In the embodiment, the API invoker can be another UE or an AF. The common API framework for 3GPP northbound APIs (CAPIF) function can be a CAPIF core function (CCF) or an authorization function, or the CAPIF authentication and authorization function can be implemented through a network function deployed by an operator, including but not limited to a network exposure function (NEF).

In the embodiment, the target resource includes, but is not limited to, location information of the UE as the target resource owner, quality of service (QoS) information, etc.

In one example, the authorization request message includes but is not limited to at least one of the following: an identifier of the API invoker; an identifier of the target resource owner; an identifier of the target resource; an identifier of the service API requested by the API invoker; an identifier of the service requested by the API invoker; an identifier of the service operation requested by the API invoker.

The identifier of the API invoker may include but is not limited to the following three categories:
The first category is the terminal identifier of the API invoker, including but not limited to the IP multimedia private identity (IMPI) of the API invoker, the generic public subscription identifier (GPSI) of the API invoker, the Application layer ID of the API invoker, the AKMA key identifier (A-KID) of the API invoker, the bootstrapping transaction identifier (B-TID) of the API invoker, or the subscription concealed identifier (SUCI) of the API invoker.

The second category is the application function ID or the application ID.

The third category is application function set ID or application set ID.

The UE is the target resource owner. Accordingly, the identifier of the target resource owner may be the terminal identifier of the UE, including but not limited to the IMPI, GPSI, application layer ID, A-KID, B-TID, or SUCI of the UE.

The identifier of the target resource may identify the location information, QoS information, etc. of the target resource owner.

The identifier of the service API requested by the API invoker may be the identifier of the API that the API invoker requests the target resource owner to authorize.

The identifier of the service requested by the API invoker may be the identifier of the service that the API invoker requests the target resource owner to authorize.

The identifier of the service operation requested by the API invoker may refer to the identifier of the service operation that the API invoker requests the target resource owner to authorize.

In step 102, based on the authorization request message, it is determined whether the API invoker is allowed to obtain the target resource.

In step 103, an authorization response message is sent to the CAPIF authentication and authorization function.

In the embodiment of the present disclosure, the authorization response message is used to indicate whether the UE agrees to provide the specified authorization for the API invoker.

In one example, the authorization response message is used to indicate at least one of the following: the type of token that the UE needs to obtain; whether the UE agrees to provide the specified authorization to the API invoker; the UE permanently agrees to provide the specified authorization to the API invoker; the UE permanently disagrees to provide the specified authorization to the API invoker; the API invoker needs to perform new authorization each time it accesses the target resource; the UE agrees to provide the specified authorization to the API invoker based on the authorization conditions; the UE disagrees to provide the specified authorization to the API invoker based on the authorization conditions.

The token type includes but is not limited to a refresh tokens, and an access token. The authorization condition includes but is not limited to the API invoker being in a specified geographic area.

For example, when the API invoker is located in the specified geographic area, it is agreed to provide the specified authorization to the API invoker; or, when the API invoker is located in the specified geographic area, it is not agreed to provide the specified authorization to the API invoker.

The above is only an exemplary description, and other contents indicated by the authorization response message should fall within the protection scope of this disclosure.

In the above embodiment, the UE as the target resource owner can determine whether to agree to the API invoker to obtain the UE's target resources based on the authorization request message sent by the CAPIF authentication and authorization function, thereby achieving the purpose of enabling user authorization during the API invoking process and having high availability.

In some optional embodiments, the UE as the target resource owner may pre-authenticate with the CAPIF authentication and authorization function, wherein the CAPIF authentication and authorization function may include but is not limited to the CAPIF core function and the authorization function, or the CAPIF authentication and authorization function may be implemented through a network function deployed by an operator, including but not limited to NEF.

In a possible implementation, the UE may perform mutual identity authentication with the CAPIF authentication and authorization function based on a certificate.

In another possible implementation, the API invoker may perform mutual identity authentication with the CAPIF authentication and authorization function based on a general authentication mechanism GBA.

In another possible implementation, the UE may perform mutual identity authentication with the CAPIF authentication and authorization function based on an AKMA mechanism.

In an example, the CAPIF authentication and authorization function is CCF, the UE may authenticate the CCF based on the certificate, and the CCF may authenticate the UE based on the GBA, the AKMA mechanism or the certificate.

The CCF may generate a certificate for the UE after the onboarding process of the UE, that is, the UE certificate is allocated to the UE by the CAPIF authentication and authorization function.

In another example, the CAPIF authentication and authorization function is the authorization function, the UE may authenticate the authorization function based on the certificate, and the authorization function may authenticate the UE based on the GBA, the AKMA mechanism or the certificate.

In the embodiment, the certificate can be allocated by the CCF.

In the embodiment of the present disclosure, after the UE passes mutual identity authentication with the CAPIF authentication and authorization function, the UE can establish a first secure connection with the CAPIF authentication and authorization function through the transport layer security (TLS) protocol.

Further, the UE may receive an authorization request message sent by the CAPIF authentication and authorization function through the first secure connection.

The CAPIF core function may send an authorization response message to the CAPIF authentication and authorization function through the first secure connection.

In the above embodiment, the CAPIF core function can perform mutual identity authentication with the CAPIF authentication and authorization function. After the identity authentication is passed, a first secure connection is established to ensure the secure transmission of the authorization request message and the authorization response message with high availability.

Hereinafter, the northbound API invoking method provided by the present disclosure is introduced from the API invoker side.

An embodiment of the present disclosure provides a northbound API invoking method, as shown in FIG. 2, which is a flow chart of a northbound API invoking method according to an embodiment, which can be executed by an API invoker, wherein the API invoker can be other UEs different from the target resource owner or AFs, which is not limited by the present disclosure. The method may include the following steps.

In step 201, an authorization request message is sent to the common API framework CAPIF authentication and authorization function to request for obtaining a specified authorization.

In the embodiment of the present disclosure, the specified authorization is an authorization corresponding to a target resource of a user equipment UE, wherein the UE is an owner of the target resource.

In one example, the authorization request message includes but is not limited to at least one of the following: an identifier of the API invoker; an identifier of the target resource owner; an identifier of the target resource; an identifier of the service API requested by the API invoker; an identifier of the service requested by the API invoker; an identifier of the service operation requested by the API invoker.

The identifier of the API invoker may include but is not limited to the following three categories:
The first category is the terminal identifier of the API invoker, including but not limited to the IMPI of the API invoker, the GPSI of the API invoker, the Application layer ID of the API invoker, the A-KID of the API invoker, the B-TID of the API invoker, or the SUCI of the API invoker.

The second category is the application function ID or the application ID.

The third category is application function set ID or application set ID.

The UE is the target resource owner. Accordingly, the identifier of the target resource owner may be the terminal identifier of the UE, including but not limited to the IMPI, GPSI, application layer ID, A-KID, B-TID, or SUCI of the UE.

The identifier of the target resource may identify the location information, QoS information, etc. of the target resource owner.

The identifier of the service API requested by the API invoker may be the identifier of the API that the API invoker requests the target resource owner to authorize.

The identifier of the service requested by the API invoker may be the identifier of the service that the API invoker requests the target resource owner to authorize.

The identifier of the service operation requested by the API invoker may refer to the identifier of the service operation that the API invoker requests the target resource owner to authorize.

In the embodiments of the present disclosure, the CAPIF authentication and authorization function may be a CCF or an authorization function, or the CAPIF authentication and authorization function may be implemented by a network function deployed by an operator, including but not limited to NEF.

In step 202, an authorization response message returned by the CAPIF authentication and authorization function is received.

In the disclosed embodiment, the CAPIF authentication and authorization function may send an authorization request message to the target resource owner, and forward the authorization response message returned by the target resource owner to the API invoker, wherein the authorization response message is used to indicate whether the UE agrees to provide the specified authorization to the API invoker.

In one example, the authorization response message is used to indicate at least one of the following: the type of token that the UE needs to obtain; whether the UE agrees to provide the specified authorization to the API invoker; the UE permanently agrees to provide the specified authorization to the API invoker; the UE permanently disagrees to provide the specified authorization to the API invoker; the API invoker needs to perform new authorization each time it accesses the target resource; the UE agrees to provide the specified authorization to the API invoker based on the authorization conditions; the UE disagrees to provide the specified authorization to the API invoker based on the authorization conditions.

The token type includes but is not limited to a refresh tokens, and an access token.

The authorization condition includes but is not limited to the API invoker being in a specified geographic area.

For example, when the API invoker is located in the specified geographic area, it is agreed to provide the specified authorization to the API invoker; or, when the API invoker is located in the specified geographic area, it is not agreed to provide the specified authorization to the API invoker.

The above is only an exemplary description, and other contents indicated by the authorization response message should fall within the protection scope of this disclosure.

In an example, the authorization response message may directly carry a token, and the token is used to obtain, modify or set the target resource.

In another example, the authorization response message carries an authorization code, and the API invoker can send a first token request message to the CAPIF authentication and authorization function to request the token, wherein the first token request message carries the authorization code. Further, the CAPIF authentication and authorization function can send a token response message carrying the token to the API invoker based on the authorization code.

In one example, the token includes but is not limited to at least one of the following information: a token type; an identifier of the CAPIF authentication and authorization function; an identifier of the API invoker; an identifier of the expected service API; an identifier of the service requested by the API invoker; an identifier of the service operation requested by the API invoker; an identifier of the target resource; an identifier of the owner of the target resource; a geographic area of the API invoker when accessing the target resource; an identifier of the AEF; and a valid expiration time point of the token.

In the embodiment, the identifier of CAPIF authentication and authorization functions includes but is not limited to the following three categories:
The first category is domain name information, including but not limited to the fully qualified domain name (FQDN) of the CAPIF authentication and authorization function and the address of the CAPIF authentication and authorization function, including but not limited to the internet protocol (IP) address of the CAPIF authentication and authorization function.

The second category is the network function identifier of the CAPIF authentication and authorization function, or the network function instance ID (or NF instance ID).

The third category is the network function set ID of the CAPIF authentication and authorization function, etc.

The identifier of the API invoker may include but is not limited to the following three categories:
The first category is the terminal identifier of the API invoker, including but not limited to the IP multimedia private identity (IMPI) of the API invoker, the generic public subscription identifier (GPSI) of the API invoker, the application layer ID of the API invoker, the AKMA key identifier (A-KID) of the API invoker, the bootstrapping transaction identifier (B-TID) of the API invoker, or the subscription concealed identifier (SUCI) of the API invoker.

The second category is the application function identifier or the application ID.

The third category is the application function set ID or the application set ID.

The UE is the target resource owner, and accordingly, the identifier of the target resource owner may be the terminal identifier of the UE, including but not limited to the IMPI, GPSI, application layer ID, A-KID, B-TID or SUCI of the UE.

The identifier of the expected service API may refer to the identifier of the API that the CAPIF authentication and authorization function expects to be able to serve the API invoker.

The identifier of the service requested by the API invoker may refer to the identifier of the service that the API invoker requests the target resource owner to authorize.

The identifier of the service operation requested by the API invoker may refer to the identifier of the service operation that the API invoker requests the target resource owner to authorize.

In the embodiment, the identifier of the AEF includes but is not limited to the following three categories:
The first category is the domain name information of AEF, including but not limited to the FQDN and IP address of AEF.

The second category is the network function entity identifier (or NF instance Network ID) or the network function ID.

The third category is the network function set ID.

In step 203, in response to the authorization response message indicating that the UE agrees to provide the specified authorization for the API invoker, a service API invoke request message carrying at least a token is sent to the API exposing function AEF.

In an embodiment of the present disclosure, in response to the API invoker determining that the UE agrees to provide the specified authorization to the API invoker based on the authorization response message, the API invoker may send a service API invoke request message carrying a token to an API exposure function (AEF), wherein the token is a token used to obtain the target resource.

In one example, the service API invoke request message may include, but is not limited to, at least one of the following: an identifier of the API invoker; an identifier of the target resource owner; an identifier of the target resource; an identifier of the service API requested by the API invoker; an identifier of the service requested by the API invoker; an identifier of the service operation requested by the API invoker; and the token.

The explanation of the specific information content included in the service API invoke request message is consistent with the explanation of the information content involved in the above embodiment, and will not be repeated here.

In step 204, a service API invoke response message returned by the AEF is received.

In an embodiment of the present disclosure, when the AEF determines that the verification result of the token is valid and the information in the service API invoke request message matches the information in the token, a service API invoke response message can be sent to the API invoker, which carries the target resource requested by the API invoker.

In the above embodiment, the API invoker can obtain the target resource of the target resource owner based on user authorization, wherein the API invoker is the target resource owner, thereby achieving the purpose of enabling user authorization during the API invoking process, and having high usability.

In some optional embodiments, when the API invoker determines that it needs to obtain the target resource, it can first determine whether there is an authorized token or authorization code locally.

In a possible implementation, when the API invoker has an authorized token locally, it can directly send a service API invoke request message carrying at least the token to the AEF, and receive a service API invoke response message returned by the AEF.

The specific implementation method is similar to the above steps 203 and 204 and will not be repeated here.

In another possible implementation, when the API invoker has the authorization code locally, the API invoker can send a first token request message to the CAPIF authentication and authorization function to request the token; wherein the first token request message carries the authorization code. Further, the API invoker can receive a token response message carrying the token returned by the CAPIF authentication and authorization function. Thus, a service API invoke request message carrying at least the token is sent to the AEF, and a service API invoke response message returned by the AEF is received.

In the above embodiment, the API invoker can obtain the target resource directly from the AEF in the above manner, or obtain the token from the CAPIF and then obtain the target resource from the AEF, without repeatedly requesting authorization from the target resource owner, thus saving signaling resources and having high availability.

In some optional embodiments, when the API invoker determines that it needs to obtain the target resource, it can first determine whether there is an authorized token or authorization code locally.

In another possible implementation, the API invoker does not have an authorized token and an authorization code locally, so the API invoker needs to obtain authorization from the target resource owner, that is, the above steps 201 to 204 need to be executed at this time.

In the above embodiment, the purpose of enabling user authorization during the API invoking process is achieved, and the availability is high.

In some optional embodiments, the token type in the authorization response message includes but is not limited to a refresh token and an access token.

In response to the API invoker receiving the authorization response message carrying a first token whose token type is a refresh token, the API invoker can send a second token request message carrying the first token to the CAPIF authentication and authorization function. The second token request message is used to request a second token whose token type is an access token.

In the embodiment, the CAPIF authentication and authorization function may include but is not limited to the CAPIF core function and the authorization function, or the CAPIF authentication and authorization function may be implemented through network functions deployed by the operator, including but not limited to NEF.

Furthermore, the API invoker may receive the second token returned by the CAPIF authentication and authorization function, the token type of which is an access token.

The API invoker may send the service API invoke request message carrying at least the second token whose token type is an access token to the AEF.

It should be noted that in the present disclosure, the API invoker obtains the second token whose token type is an access token from the CAPIF authentication and authorization function through the first token whose token type is a refresh token, and the token authorization content may remain unchanged, that is, the authorization content of the first token is the same as that of the second token. Alternatively, the authorization scope of the second token is smaller, but the authority of the second token whose token type is an access token cannot exceed the authority of the first token whose token type is a refresh token.

In the embodiments of the present disclosure, mainly for security reasons, the first token whose token type is a refresh token may be used once a day to obtain the second token whose token type is an access token. The second token can be used as long as there is an access behavior and is easy to be stolen. Since the second token is used less frequently, the security of using the first token whose token type is a refresh token is higher. At the same time, in response to the second token whose token type is an access token being stolen, the first token whose token type is a refresh token can be used to request a new second token to perform an access behavior without obtaining a new token through user authorization.

In response to the API invoker obtaining the second token whose token type is an access token, the API invoker may directly send the service API invoke request message of the token to the AEF, wherein the second token may be carried.

In the above embodiment, the API invoker can ensure the security and reliability of obtaining the target resource through the above method.

In some optional embodiments, the API invoker may pre-authenticate with the CAPIF authentication and authorization function. The CAPIF authentication and authorization function may include but is not limited to the CAPIF core function and the authorization function, or the CAPIF authentication and authorization function may be implemented through a network function deployed by an operator, including but not limited to NEF.

In a possible implementation, the API invoker may perform mutual identity authentication with the CAPIF authentication and authorization function based on the certificate.

In another possible implementation, the API invoker may perform mutual identity authentication with the CAPIF authentication and authorization function based on the general authentication mechanism GBA.

In another possible implementation, the API invoker may perform mutual identity authentication with the CAPIF authentication and authorization function based on the AKMA mechanism.

In an example, the CAPIF authentication and authorization function is a CAPIF core function, and the API invoker can authenticate the CAPIF core function based on the certificate. The CAPIF core function can authenticate the API invoker based on the GBA, the AKMA mechanism or the certificate.

In the embodiment, the core function of CAPIF can generate a certificate for the API invoker after the onboarding process of the API invoker.

In another example, the CAPIF authentication authorization function is the authorization function, the API invoker can authenticate the authorization function based on the certificate, and the authorization function can authenticate the API invoker based on the GBA, the AKMA mechanism or the certificate.

In the embodiment, the certificate can be assigned by the CAPIF core function.

In the embodiment of the present disclosure, after the API invoker passes mutual identity authentication with the CAPIF authentication and authorization function, it can establish a second secure connection with the CAPIF authentication and authorization function through TLS.

Furthermore, the API invoker may send the authorization request message to the CAPIF authentication and authorization function through the second secure connection.

The API invoker can receive the authorization response message sent by the CAPIF authentication and authorization function through the second secure connection.

In the above embodiment, the API invoker can perform mutual identity authentication with the CAPIF authentication and authorization function. After the identity authentication is passed, a second secure connection is established to ensure the secure transmission of the authorization request message and the authorization response message with high availability.

In some optional embodiments, the API invoker may perform mutual identity authentication with the AEF in advance.

In a possible implementation, the API invoker may perform mutual identity authentication with the AEF based on the certificate.

In another possible implementation, the API invoker may perform mutual identity authentication with the AEF based on the GBA.

In another possible implementation, the API invoker may perform mutual identity authentication with the AEF based on the AKMA mechanism.

In an example, the API invoker may authenticate the AEF based on the certificate, and the AEF may authenticate the API invoker based on the GBA, the AKMA mechanism or the certificate.

In the embodiment, the certificate can be assigned by the CAPIF core functionality.

In the disclosed embodiment, after the API invoker passes mutual identity authentication with the AEF, a third secure connection can be established with the AEF through TLS.

Furthermore, the API invoker sends a service API invoke request message carrying the token to the AEF through the third secure connection.

The API invoker can receive the service API invoke response message returned by the AEF through the third secure connection.

Of course, the token is a second token, and the token type of the second token is an access token.

In the above embodiment, the API invoker can perform mutual identity authentication with the AEF, and after the identity authentication is passed, a third secure connection is established to ensure the secure delivery of the token and the target resource with high availability.

Hereinafter, the northbound API invoking method provided by the present disclosure is introduced from the AEF side.

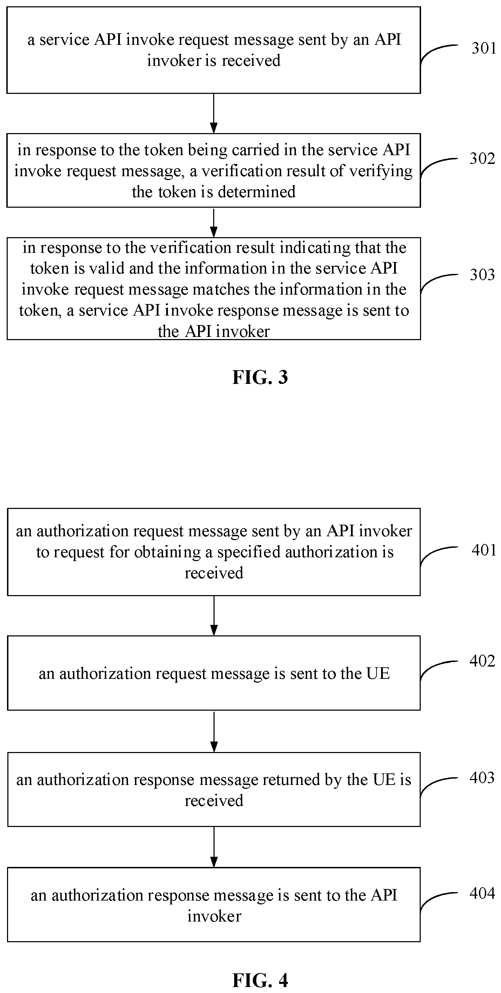

The present disclosure provides a northbound API invoking method, as shown in FIG. 3, which is a flow chart of a northbound API invoking method according to an embodiment, which can be executed by AEF. The method may include the following steps.

In step 301, a service API invoke request message sent by an API invoker is received.

In one example, the service API invoke request message includes at least one of the following: an identifier of the API invoker; an identifier of the target resource owner; an identifier of the target resource; an identifier of the service API requested by the API invoker; an identifier of the service requested by the API invoker; an identifier of the service operation requested by the API invoker; and the token.

The identifier of the API invoker may include but is not limited to the following three categories:
The first category is the terminal identifier of the API invoker, including but not limited to the IP multimedia private identity (IMPI) of the API invoker, the generic public subscription identifier (GPSI) of the API invoker, the application layer ID of the API invoker, the AKMA key identifier (A-KID) of the API invoker, the bootstrapping transaction identifier (B-TID) of the API invoker, or the subscription concealed identifier (SUCI) of the API invoker.

The second category is the application function identifier or the application ID.

The third category is the application function set ID or the application set ID.

The UE is the target resource owner. Accordingly, the identifier of the target resource owner may be the terminal identifier of the UE, including but not limited to the IMPI, GPSI, application layer ID, A-KID, B-TID, or SUCI of the UE.

The identifier of the target resource may identify the location information, QoS information, etc. of the target resource owner.

The identifier of the service API requested by the API invoker may be the identifier of the API that the API invoker requests the target resource owner to authorize.

The identifier of the service requested by the API invoker may be the identifier of the service that the API invoker requests the target resource owner to authorize.

The identifier of the service operation requested by the API invoker may refer to the identifier of the service operation that the API invoker requests the target resource owner to authorize.

In one example, the token includes but is not limited to at least one of the following information: a token type; an identifier of the CAPIF authentication and authorization function; an identifier of the API invoker; an identifier of the expected service API; an identifier of the service requested by the API invoker; an identifier of the service operation requested by the API invoker; an identifier of the target resource; an identifier of the owner of the target resource; a geographic area of the API invoker when accessing the target resource; an identifier of the AEF; and a valid expiration time point of the token.

In the embodiment, the token type may be a refresh token and an access token.

In the embodiment, the identifier of CAPIF authentication and authorization functions includes but is not limited to the following three categories:
The first category is domain name information, including but not limited to the fully qualified domain name (FQDN) of the CAPIF authentication and authorization function and the address of the CAPIF authentication and authorization function, including but not limited to the internet protocol (IP) address of the CAPIF authentication and authorization function.

The second category is the network function identifier of the CAPIF authentication and authorization function.

The third category is the network function set ID of the CAPIF authentication and authorization function, etc.

The identifier of the API invoker may include but is not limited to the following three categories:
The first category is the terminal identifier of the API invoker, including but not limited to the IP multimedia private identity (IMPI) of the API invoker, the generic public subscription identifier (GPSI) of the API invoker, the application layer ID of the API invoker, the AKMA key identifier (A-KID) of the API invoker, the bootstrapping transaction identifier (B-TID) of the API invoker, or the subscription concealed identifier (SUCI) of the API invoker.

The second category is the network function identifier of the CAPIF authentication and authorization function.

The third category is the network function set ID of the CAPIF authentication and authorization function, etc.

The identifier of the target resource may identify the location information, QoS information, etc. of the target resource owner.

The UE is the target resource owner. Accordingly, the identifier of the target resource owner may be the terminal identifier of the UE, including but not limited to the IMPI, GPSI, application layer ID, A-KID, B-TID, or SUCI of the UE.

The identifier of the expected service API may refer to the identifier of the API that the CAPIF authentication and authorization function expects to be able to serve the API invoker.

The identifier of the service requested by the API invoker may refer to the identifier of the service that the API invoker requests the target resource owner to authorize.

The identifier of the service operation requested by the API invoker may refer to the identifier of the service operation that the API invoker requests the target resource owner to authorize.

In the embodiment, the identifier of the AEF includes but is not limited to the following three categories:
The first category is the domain name information of AEF, including but not limited to the FQDN and IP address of AEF.

The second category is the network function entity identifier (or NF instance Network ID) or the network function ID.

The third category is the network function set ID.

In step 302, in response to the token being carried in the service API invoke request message, a verification result of verifying the token is determined.

The token is used to authorize the API invoker to obtain the target resource of the target resource owner. The information included in the token has been introduced in the above embodiment and will not be repeated here.

In an example, the AEF may verify the integrity of the token based on the public key of the CAPIF authentication and authorization function to determine the verification result.

In an example, the AEF may send the token to the CAPIF authentication and authorization function, and receive a verification result returned by the CAPIF authentication and authorization function for verifying the integrity of the token.

It should be noted here that when the service API invoke request message carries a second token whose token type is an access token, the AEF determines the verification result of the second token.

In step 303, in response to the verification result indicating that the token is valid and the information in the service API invoke request message matches the information in the token, a service API invoke response message is sent to the API invoker.

In one example, the information in the service API invoke request message includes the identifier of the API invoker; the identifier of the target resource owner; the identifier of the target resource; the identifier of the service API requested by the API invoker; the identifier of the service requested by the API invoker; and the identifier of the service operation requested by the API invoker.

In one example, the token includes but is not limited to at least one of the following information: the token type; the identifier of the CAPIF authentication and authorization function; the identifier of the API invoker; the identifier of the expected service API; the identifier of the service requested by the API invoker; the identifier of the service operation requested by the API invoker; the identifier of the target resource; the identifier of the owner of the target resource; the geographic area of the API invoker when accessing the target resource; the identifier of the AEF; and the valid expiration time point of the token.

AEF needs to compare the information in the service API invoke request message with the information in the token to see if they match. If the verification result indicates that the token is valid and the information in the service API invoke request message matches the information in the token, that is, the service API request initiated by the API invoker is within the permitted scope of the token, then the AEF sends a service API invoke response message to the API invoker. The service API invoke response message carries the target resource.

Of course, AEF needs to pre-authenticate the first identity information of the API invoker, and after completing the identity authentication, determine the verification result of the token and whether the information in the service API invoke request message matches the information included in the token.

In the embodiment, the first identity information includes but is not limited to the identifier of the API invoker, and optionally may include the A-KID of the API invoker, the B-TID of the API invoker, the SUPI of the API invoker, and the GPSI of the API invoker.

In the above embodiment, after receiving the API invoke request message sent by the API invoker, the AEF can verify the token in response to the service API invoke request message carrying the token, and after the verification result indicates that the token is valid, send a service API invoke response message to the API invoker, and the target resource is carried in the message. The purpose of enabling user authorization to provide the target resource to the API invoker during the API invoking process is achieved, and the availability is high.

In some optional embodiments, in response to the verification result indicating that the token is invalid, the AEF may terminate the API invoking process.

In the above embodiment, in response to the AEF determining that the token is invalid, the API invoking process can be terminated in time to ensure the security and reliability of the API invoking process.

In some optional embodiments, in response to the service API invoke request message not carrying the token, the AEF may send a service API invoking rejection message to the API invoker.

Optionally, the service API invoking rejection message may carry a rejection cause, which may be that a token is not carried.

In the above embodiment, in response to the service API invoke request message not carrying the token, the AEF may reject the request of the API invoker, thereby also ensuring the security and reliability of the API invoking process.

In some optional embodiments, in addition to verifying the integrity of the token, the AEF also needs to pre-authenticate the first identity information of the API invoker, where the first identity information includes but is not limited to the identifier of the API invoker, and optionally may include the A-KID of the API invoker, the B-TID of the API invoker, the SUPI of the API invoker, and the GPSI of the API invoker.

Further, in response to the authenticated first identity information being identical to the identifier of the API invoker in the certificate, the verification result of the token being determined to be valid, while the information in the service API invoke request message not matching the information in the token, that is, the service API invoke request initiated by the API invoker exceeding the range allowed by the token, then the AEF may send a service API invoking rejection message to the API invoker.

In response to the authenticated first identity information being identical to the identifier of the API invoker in the certificate, determining that the verification result of the token is valid, and the information in the service API invoke request message matching the information in the token, that is, the service API invoke request initiated by the API invoker not exceeding the range allowed by the token, then the AEF can send a service API invoke response message to the API invoker.

In the above embodiment, AEF can reject or approve the service API invoke request initiated by the API invoker when the above conditions are met, ensuring the security and reliability of the API invoking process.

In one possible implementation, the service API invoke request message includes at least one of the following: the identifier of the API invoker; the identifier of the target resource owner; the identifier of the target resource; the identifier of the service API requested by the API invoker; the identifier of the service requested by the API invoker; the identifier of the service operation requested by the API invoker; and the token.

The specific meaning of the information in the service API invoke request message has been introduced in the above embodiment and will not be repeated here.

It should be noted here that, in response to the token carried in the service API invoke request message sent by the API invoker to the AEF including the geographic area where the API invoker is located when accessing the target resource, the AEF can send a location request message to the core network device, and the location request message is used to request the location information of the API invoker. In response to the location information provided by the core network device being consistent with the geographic area included in the token, the AEF executes step 303, that is, in response to the verification result indicating that the token is valid and the information in the service API invoke request message matches the information in the token, the service API invoke response message is sent to the API invoker.

In the above embodiment, AEF can obtain the location information of the API invoker from the core network device to determine whether the location of the API invoker is consistent with the geographic area in the token, thereby improving the security of the API invoker's acquisition of target resources.

**In** some optional embodiments, the AEF may perform mutual identity authentication with the API invoker in advance.

In a possible implementation, the AEF may perform mutual identity authentication with the API invoker based on the certificate.

In another possible implementation, the AEF may perform mutual identity authentication with the API invoker based on the GBA.

In another possible implementation, the AEF may perform mutual identity authentication with the API invoker based on the AKMA mechanism.

In an example, the API invoker may authenticate the AEF based on the certificate, and the AEF may authenticate the API invoker based on the GBA, the AKMA mechanism or the certificate.

In the embodiment, the certificate can be assigned by the CAPIF core functionality.

In the disclosed embodiment, after mutual identity authentication is passed between the AEF and the API invoker, the AEF may establish a third secure connection with the API invoker through TLS.

Further, the AEF receives a service API invoke request message sent by the API invoker through the third secure connection.

The AEF may send a service API invoke response message to the API invoker through the third secure connection.

In the above embodiment, AEF can perform mutual identity authentication with the API invoker, and after the identity authentication is passed, the third secure connection is established, thereby ensuring the secure delivery of the token and the target resource with high availability.

Hereinafter, the northbound API invoking method provided by the present disclosure is introduced from the perspective of the CAPIF authentication and authorization function.

The embodiment of the present disclosure provides a northbound API invoking method, as shown in FIG. 4, which is a flow chart of a northbound API invoking method according to an embodiment, which can be executed by a CAPIF authentication and authorization function, wherein the CAPIF authentication and authorization function may include but is not limited to a CAPIF core function and an authorization function, or the CAPIF authentication and authorization function may be implemented by a network function deployed by an operator, which is not limited in the present disclosure. The method may include the following steps.

In step 401, an authorization request message sent by an API invoker to request for obtaining a specified authorization is received.

In the embodiment of the present disclosure, the specified authorization is an authorization corresponding to the target resource of the user equipment UE. The target UE is the owner of the target resource.

The API invoker may be another UE different from the target resource owner or an AF.

The target resource includes but is not limited to the location information, and the QoS information, etc. of the UE as the target resource owner.

In one example, the authorization request message includes but is not limited to at least one of the following: an identifier of the API invoker; an identifier of the target resource owner; an identifier of the target resource; an identifier of the service API requested by the API invoker; an identifier of the service requested by the API invoker; an identifier of the service operation requested by the API invoker.

The explanation of the specific information content included in the authorization request message is the same as that in the previous embodiment and will not be repeated here.

In step 402, an authorization request message is sent to the UE.

In step 403, an authorization response message returned by the UE is received.

In the embodiment of the present disclosure, the authorization response message is used to indicate whether the UE agrees to provide the specified authorization for the API invoker.

In one example, the authorization response message is used to indicate at least one of the following: the type of token that the UE needs to obtain; whether the UE agrees to provide the specified authorization to the API invoker; the UE permanently agrees to provide the specified authorization to the API invoker; the UE permanently disagrees to provide the specified authorization to the API invoker; the API invoker needs to perform new authorization each time it accesses the target resource; the UE agrees to provide the specified authorization to the API invoker based on the authorization conditions; the UE disagrees to provide the specified authorization to the API invoker based on the authorization conditions.

The explanation of the specific content indicated by the authorization response message is the same as that in the previous embodiment and will not be repeated here.

In one example, in response to the authorization response message indicating that the UE agrees to provide the specified authorization to the API invoker, the CAPIF authentication and authorization function may directly carry a token in the authorization response message, wherein the token is used to obtain, modify or set the target resource.

In another example, in response to the authorization response message indicating that the UE agrees to provide the specified authorization to the API invoker, the CAPIF authentication and authorization function may carry an authorization code in the authorization response message. Furthermore, the CAPIF authentication and authorization function may receive a first token request message sent by the API invoker requesting to obtain a token. The first token request message carries the authorization code, and the token is a token used to obtain, modify or set the target resource. After verifying the authorization code, the CAPIF authentication and authorization function sends a token response message carrying the token to the API invoker.

The information included in the token and its specific explanation have been introduced in the above embodiments and will not be repeated here.

In step 404, an authorization response message is sent to the API invoker.

In the above embodiment, the CAPIF authentication and authorization function may send the authorization request message to the target resource owner after receiving the authorization request message from the API invoker, and receive the authorization response message returned by the target resource owner, and then forward the authorization response message to the API invoker, thereby achieving the purpose of enabling user authorization during the API invoking process, with high availability.

In some optional embodiments, when the CAPIF authentication and authorization function generates a token for the API invoker, it should ensure that the generated token is subject to the authorization response message.

Specifically, the authorization response message sent by the UE to the CAPIF authentication and authorization function is used to indicate at least one of the following: the type of token that the UE needs to obtain; whether the UE agrees to provide the specified authorization to the API invoker; the UE permanently agrees to provide the specified authorization to the API invoker; the UE permanently disagrees to provide the specified authorization to the API invoker; the API invoker needs to perform new authorization each time it accesses the target resource; agrees to provide the specified authorization to the API invoker based on the authorization conditions; disagrees to provide the specified authorization to the API invoker based on the authorization conditions.

The token type includes but is not limited to refresh token and access token. The token type generated by the CAPIF authentication and authorization function for the API invoker should be the same as the token type that the UE needs to obtain as indicated by the authorization response message.

In the embodiment, in response to the authorization response message indicating that the UE agrees to provide the specified authorization for the API invoker, the CAPIF authentication and authorization function can generate a token for the API invoker, otherwise a token cannot be generated for the API invoker.

In response to the authorization response message indicating that the UE permanently agrees to provide the specified authorization for the API invoker, the CAPIF authentication and authorization function can generate a token with a relatively long validity period for the API invoker.

In response to the authorization response message indicating that the UE permanently disagrees to provide the specified authorization for the API invoker, the CAPIF authentication and authorization function cannot generate a token for the API invoker.

In response to the authorization response message indicating that the API invoker needs to perform a new authorization each time it accesses the target resource, the CAPIF authentication and authorization function may generate a token with a relatively short validity period for the API invoker.

In response to the authorization response message indicating agreeing to provide the specified authorization to the API invoker based on the authorization conditions, wherein the authorization conditions may include but are not limited to the API invoker being in a specified geographic area, the token generated by the CAPIF authentication authorization function for the API invoker needs to include limiting conditions such as the geographic area.

In response to the authorization response message indicating disagreeing to provide the specified authorization to the API invoker based on the authorization conditions, the CAPIF authentication and authorization function cannot generate a token for the API invoker.

In the above embodiment, the CAPIF authentication and authorization function can refuse to generate a token for the API invoker according to the authorization response message returned by the UE, or generate a token for the API invoker that is constrained by the authorization response message. This achieves the purpose of enabling user authorization during the API invoking process, and has high availability.

In some optional embodiments, in response to the token type in the authorization response message being a refresh token, the CAPIF authentication and authorization function may receive a second token request message sent by the API invoker when the API invoker needs to obtain the target resource, the second token request message carrying a first token whose token type is a refresh token, and the second token request message is used to request obtaining a second token whose token type is an access token. The CAPIF authentication and authorization function may send the second token whose token type is an access token to the API invoker based on the first token request message.

Of course, in response to the authorization response message indicating that the token type is an access token, the API invoker can directly access the AEF based on the second token whose token type is an access token, thereby obtaining the target resource.

In the above embodiment, the security and reliability of the API invoker in obtaining the target resource can be ensured through the above method.

In some optional embodiments, the CAPIF authentication and authorization function may perform mutual identity authentication with the API invoker in advance. The CAPIF authentication and authorization function may include but is not limited to the CAPIF core function, the authorization function, or the CAPIF authentication and authorization function may be implemented through a network function deployed by an operator, including but not limited to NEF. The API invoker may be a UE or an AF, where the UE is a UE different from the target resource owner.

In a possible implementation, the CAPIF authentication and authorization function may perform mutual identity authentication with the API invoker based on the certificate.

In another possible implementation, the CAPIF authentication and authorization function may perform mutual identity authentication with the API invoker based on the general authentication mechanism GBA.

In another possible implementation, the CAPIF authentication and authorization function may perform mutual identity authentication with the API invoker based on the AKMA mechanism.

In an example, the CAPIF authentication and authorization function is a CAPIF core function, and the API invoker can authenticate the CAPIF core function based on the certificate. The CAPIF core function can authenticate the API invoker based on the GBA, the AKMA mechanism or the certificate.

The CAPIF core function can generate a certificate for the API invoker after the onboarding process of the API invoker, that is, the UE's certificate is allocated to the UE by the CAPIF authentication and authorization function.

In another example, the CAPIF authentication authorization function is the authorization function, the API invoker can authenticate the authorization function based on the certificate, and the authorization function can authenticate the API invoker based on the GBA, the AKMA mechanism or the certificate.

In the embodiment, the certificate can be assigned by the CAPIF core functionality.

In the disclosed embodiment, after the CAPIF authentication and authorization function passes mutual identity authentication with the API invoker, a second secure connection can be established with the CAPIF authentication and authorization function through TLS.

Furthermore, the CAPIF authentication and authorization function may receive an authorization request message sent by the API invoker through the second secure connection.

The CAPIF authentication and authorization function can send an authorization response message to the API invoker through the second secure connection.

In the above embodiment, the CAPIF authentication and authorization function can perform mutual identity authentication with the API invoker, and after the identity authentication is passed, a second secure connection is established, thereby ensuring the secure transmission of the authorization request message and the authorization response message, with high availability.

In some optional embodiments, the CAPIF authentication and authorization function may perform mutual identity authentication with the UE as the target resource owner in advance. The CAPIF authentication and authorization function may include but is not limited to the CAPIF core function and the authorization function, or the CAPIF authentication and authorization function may be implemented through the network function deployed by the operator, including but not limited to NEF.

In a possible implementation, the CAPIF authentication and authorization function may perform mutual identity authentication with the UE based on the certificate.

In another possible implementation, the CAPIF authentication and authorization function may perform mutual identity authentication with the UE based on the general authentication mechanism GBA.

In another possible implementation, the CAPIF authentication and authorization function may perform mutual identity authentication with the UE based on the AKMA mechanism.

In an example, the CAPIF authentication and authorization function is a CAPIF core function, and the UE may authenticate the CAPIF core function based on the certificate. The CAPIF core function may authenticate the UE based on the GBA, the AKMA mechanism or the certificate.

The CAPIF core function can generate a certificate for the UE after the onboarding process of the UE's API invoking program, that is, the UE's certificate is allocated to the UE by the CAPIF authentication and authorization function.

In another example, the CAPIF authentication and authorization function is the authorization function, the UE may authenticate the authorization function based on a certificate, and the authorization function may authenticate the UE based on a GBA, an AKMA mechanism or a certificate.

In the embodiment, the certificate can be assigned by the CAPIF core functionality.

In the embodiment of the present disclosure, the CAPIF authentication and authorization function can establish a first secure connection with the UE through TLS after mutual identity authentication with the UE is passed.

Further, the CAPIF authentication and authorization function may send an authorization request message to the UE through the first secure connection.

The CAPIF authentication and authorization function may receive the authorization response message returned by the UE through the first secure connection.

In the above embodiment, the CAPIF authentication and authorization function can perform mutual identity authentication with the UE, and after the identity authentication is passed, a first secure connection is established, thereby ensuring the secure transmission of the authorization request message and the authorization response message, with high availability.

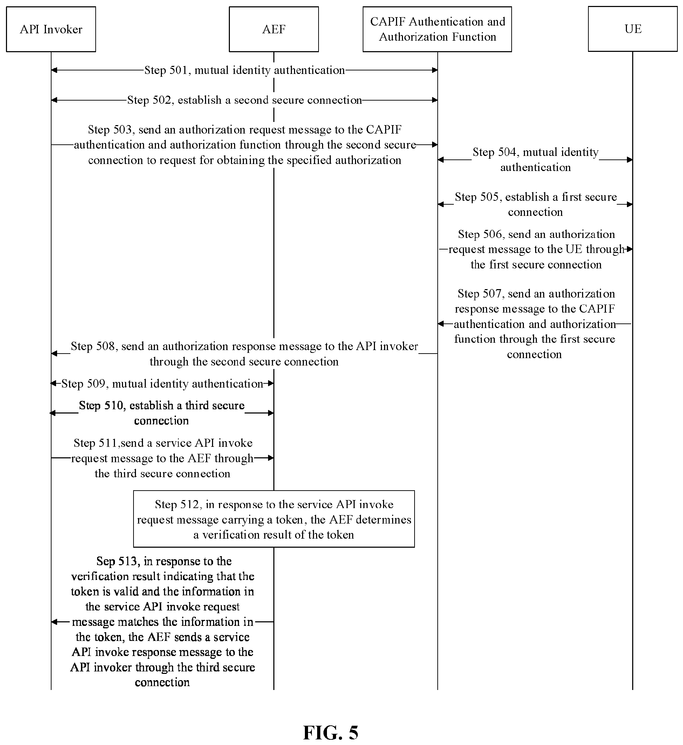

In some optional embodiments, as shown in FIG. 5, FIG. 5 is a flow chart of a northbound API invoking method according to an embodiment, and the method may include the following steps.

In step 501, the API invoker performs mutual identity authentication with the CAPIF authentication and authorization function.

In the embodiment of the present disclosure, the API invoker may be a UE other than the target resource owner, or the API invoker may be an AF.

The CAPIF authentication and authorization function may include but is not limited to the CAPIF core function and the authorization function, or the CAPIF authentication and authorization function may be implemented through the network function deployed by the operator, including but not limited to NEF.

In a possible implementation, the API invoker may perform mutual identity authentication with the CAPIF authentication and authorization function based on a certificate.

In another possible implementation, the API invoker may perform mutual identity authentication with the CAPIF authentication and authorization function based on a general authentication mechanism GBA.

In another possible implementation, the API invoker may perform mutual identity authentication with the CAPIF authentication and authorization function based on an AKMA mechanism.

In an example, the CAPIF authentication and authorization function is a CAPIF core function, and the API invoker can authenticate the CAPIF core function based on a certificate. The CAPIF core function can authenticate the API invoker based on a GBA, an AKMA mechanism or a certificate.

In the embodiment, the core function of CAPIF can generate a certificate for the API invoker after the onboarding process of the API invoker.

In another example, the CAPIF authentication authorization function is the authorization function, the API invoker can authenticate the authorization function based on the certificate, and the authorization function can authenticate the API invoker based on the GBA, the AKMA mechanism or the certificate.

In the embodiment, the certificate can be assigned by the CAPIF core functionality.

In step 502, the API invoker establishes a second secure connection with the CAPIF authentication and authorization function.

In the embodiment of the present disclosure, after the API invoker passes mutual identity authentication with the CAPIF authentication and authorization function, it can establish a second secure connection with the CAPIF authentication and authorization function through TLS.

In step 503, the API invoker sends an authorization request message to the CAPIF authentication and authorization function through the second secure connection to request for obtaining the specified authorization.

In the embodiment of the present disclosure, the specified authorization is an authorization corresponding to a target resource of a user equipment UE, wherein the UE is an owner of the target resource.

In one example, the authorization request message includes but is not limited to at least one of the following: an identifier of the API invoker; an identifier of the target resource owner; an identifier of the target resource; an identifier of the service API requested by the API invoker; an identifier of the service requested by the API invoker; an identifier of the service operation requested by the API invoker.

The identifier of the API invoker may include but is not limited to the following three categories:
The first category is the terminal identifier of the API invoker, including but not limited to the IMPI of the API invoker, the GPSI of the API invoker, the SUCI of the API invoker, and the application layer ID of the API invoker.

The second category is the application function ID or application ID.

The third category is application function set ID or application set ID.

In the embodiment, the UE is the target resource owner, and correspondingly, the identifier of the target resource owner can be the terminal identifier of the UE, including but not limited to the IMPI of the UE, the GPSI of the UE, the SUCI of the UE, the application layer ID of the UE, etc.

The identifier of the target resource may identify the location information, QoS information, etc. of the owner of the target resource.

The identifier of the service API requested by the API invoker may be the identifier of the API that the API invoker requests the target resource owner to authorize.

The identifier of the service requested by the API invoker may be the identifier of the service that the API invoker requests the target resource owner to authorize.

The identifier of the service operation requested by the API invoker may refer to the identifier of the service operation that the API invoker requests the target resource owner to authorize.

In step 504, the CAPIF authentication and authorization function performs mutual identity authentication with the UE.

In the embodiment of the present disclosure, the UE is the target resource owner.

In a possible implementation, the CAPIF authentication and authorization function may perform mutual identity authentication with the UE based on the certificate.

In another possible implementation, the CAPIF authentication and authorization function may perform mutual identity authentication with the UE based on the general authentication mechanism GBA.

In another possible implementation, the CAPIF authentication and authorization function may perform mutual identity authentication with the UE based on the AKMA mechanism.

In an example, the CAPIF authentication and authorization function is a CAPIF core function, and the UE may authenticate the CAPIF core function based on the certificate. The CAPIF core function may authenticate the UE based on the GBA, the AKMA mechanism or the certificate.

The CAPIF core function can generate a certificate for the UE after the onboarding process of the UE's API invoking program, that is, the UE's certificate is allocated to the UE by the CAPIF authentication and authorization function.

In another example, the CAPIF authentication and authorization function is the authorization function, the UE may authenticate the authorization function based on the certificate, and the authorization function may authenticate the UE based on the GBA, the AKMA mechanism or the certificate.

In the embodiment, the certificate can be assigned by the CAPIF core functionality.

In step 505, the CAPIF authentication and authorization function establishes a first secure connection with the UE.

In the embodiment of the present disclosure, the CAPIF authentication and authorization function can establish a first secure connection with the UE through TLS after mutual identity authentication with the UE is passed.

In step 506, the CAPIF authentication and authorization function sends an authorization request message to the UE through the first secure connection.

In step 507, the UE sends an authorization response message to the CAPIF authentication and authorization function through the first secure connection.

In the embodiment of the present disclosure, the authorization response message is used to indicate whether the UE agrees to provide the specified authorization for the API invoker.

In one example, the authorization response message is used to indicate at least one of the following: the type of token that the UE needs to obtain; whether the UE agrees to provide the specified authorization to the API invoker; the UE permanently agrees to provide the specified authorization to the API invoker; the UE permanently disagrees to provide the specified authorization to the API invoker; the API invoker needs to perform new authorization each time it accesses the target resource; the UE agrees to provide the specified authorization to the API invoker based on the authorization conditions; the UE disagrees to provide the specified authorization to the API invoker based on the authorization conditions.

In the embodiment, the token type includes but is not limited to a refresh token and an access token.

In the embodiment, the authorization condition includes but is not limited to the API invoker being in a specified geographic area.

In step 508, the CAPIF authentication and authorization function sends an authorization response message to the API invoker through the second secure connection.

In one example, in response to the authorization response message indicating that the UE agrees to provide the specified authorization for the API invoker, the CAPIF authentication and authorization function may directly carry a token in the authorization response message, wherein the token is a token for obtaining the target resource.

In another example, in response to the authorization response message indicating that the UE agrees to provide the specified authorization to the API invoker, the CAPIF authentication and authorization function may carry an authorization code in the authorization response message. Furthermore, the CAPIF authentication and authorization function may receive a first token request message sent by the API invoker to request a token. The first token request message carries the authorization code, and the token is used to obtain, modify or set the target resource. After verifying the authorization code, the CAPIF authentication and authorization function sends a token response message carrying the token to the API invoker (not shown in FIG. 5).

The information included in the token has been introduced in the above embodiment and will not be repeated here.

In the disclosed embodiment, the CAPIF authentication and authorization function can refuse to generate a token for the API invoker based on the authorization response message returned by the UE, or generate a token constrained by the authorization response message. The specific implementation method has been introduced in the above embodiment and will not be repeated here.

In step 509, the API invoker and the AEF perform mutual identity authentication.

In a possible implementation, the API invoker may perform mutual identity authentication with the AEF based on a certificate.

In another possible implementation, the API invoker may perform mutual identity authentication with the AEF based on a GBA.

In another possible implementation, the API invoker may perform mutual identity authentication with the AEF based on an AKMA mechanism.

In an example, the API invoker may authenticate the AEF based on a certificate, and the AEF may authenticate the API invoker based on a GBA, an AKMA mechanism or a certificate.

In the embodiment, the certificate can be assigned by the CAPIF core functionality.

In step 510, the API invoker establishes a third secure connection with the AEF.

In the disclosed embodiment, after the API invoker passes mutual identity authentication with the AEF, a third secure connection can be established with the AEF through TLS.

In step 511, the API invoker sends a service API invoke request message to the AEF through the third secure connection.

In one example, the service API invoke request message may include, but is not limited to, at least one of the following: an identifier of the API invoker; an identifier of the target resource owner; an identifier of the target resource; an identifier of the service API requested by the API invoker; an identifier of the service requested by the API invoker; an identifier of the service operation requested by the API invoker; and the token.

The identifier of the API invoker may include but is not limited to the following three categories:
The first category is the IP multimedia private identity (IMPI) of the API invoker, the generic public subscription identifier (GPSI) of the API invoker, the Application layer ID of the API invoker, the AKMA key identifier (A-KID) of the API invoker, the bootstrapping transaction identifier (B-TID) of the API invoker, or the subscription concealed identifier (SUCI) of the API invoker.

The second category is the application function ID or the application ID.

The third category is application function set ID or application set ID.

The UE is the target resource owner. Accordingly, the identifier of the target resource owner may be the terminal identifier of the UE, including but not limited to the IMPI, GPSI, application layer ID, A-KID, B-TID, or SUCI of the UE.

The identifier of the target resource may identify the location information, QoS information, etc. of the target resource owner.

The identifier of the service API requested by the API invoker may be the identifier of the API that the API invoker requests the target resource owner to authorize.

The identifier of the service requested by the API invoker may be the identifier of the service that the API invoker requests the target resource owner to authorize.

The identifier of the service operation requested by the API invoker may refer to the identifier of the service operation that the API invoker requests the target resource owner to authorize.

In one example, the token includes but is not limited to at least one of the following information: a token type; an identifier of the CAPIF authentication and authorization function; an identifier of the API invoker; an identifier of the expected service API; an identifier of the service requested by the API invoker; an identifier of the service operation requested by the API invoker; an identifier of the target resource; an identifier of the owner of the target resource; a geographic area of the API invoker when accessing the target resource; an identifier of the AEF; and a valid expiration time point of the token.

In the embodiment, the identifier of CAPIF authentication and authorization functions includes but is not limited to the following three categories:
The first category is domain name information, including but not limited to the fully qualified domain name (FQDN) of the CAPIF authentication and authorization function and the address of the CAPIF authentication and authorization function, including but not limited to the internet protocol (IP) address of the CAPIF authentication and authorization function.

The second category is the network function identifier of the CAPIF authentication and authorization function, or the network function instance ID (or NF instance ID).

The third category is the network function set ID of the CAPIF authentication and authorization function, etc.

The identifier of the target resource may identify the location information, QoS information, etc. of the target resource owner.

The UE is the target resource owner. Accordingly, the identifier of the target resource owner may be the terminal identifier of the UE, including but not limited to the IMPI of the UE, the GPSI of the UE, the SUCI of the UE, the application layer ID of the UE, etc.

The identifier of the service API requested by the API invoker may be the identifier of the API that the API invoker requests the target resource owner to authorize.

The identifier of the service requested by the API invoker may be the identifier of the service that the API invoker requests the target resource owner to authorize.

The identifier of the service operation requested by the API invoker may refer to the identifier of the service operation that the API invoker requests the target resource owner to authorize.

In the embodiments, the identifier of the AEF includes but is not limited to the following three categories:
The first category is the domain name information of AEF, including but not limited to the FQDN and IP address of AEF.

The second category is the network function instance ID (NF instance ID) or network function ID.

The third category is network function set ID.

In step 512, in response to the service API invoke request message carrying a token, the AEF determines a verification result of the token.

The token is used to authorize the API invoker to obtain the target resource of the target resource owner. The information included in the token has been introduced in the above embodiment and will not be repeated here.

In an example, the AEF may verify the integrity of the token based on the public key of the CAPIF authentication and authorization function to determine the verification result.

In an example, the AEF may send the token to the CAPIF authentication and authorization function, and receive a verification result returned by the CAPIF authentication and authorization function for verifying the integrity of the token.

In some optional embodiments, in addition to verifying the integrity of the token, the AEF also needs to pre-authenticate the first identity information of the API invoker, wherein the first identity information includes but is not limited to the identifier of the API invoker, and optionally may include the A-KID of the API invoker, the B-TID of the API invoker, the SUPI of the API invoker, and the GPSI of the API invoker.

Furthermore, in response to the authenticated first identity information being identical to the identifier of the API invoker in the token, and the information in the service API invoke request message being consistent with the information in the token, the AEF may send a service API invoke response message to the API invoker if the verification result indicates that the token is valid.

That is, in response to the first identity information that has been authenticated being the same as the identifier of the API invoker in the certificate, and the identifier of the target resource owner in the service API invoke request message being the same as the identifier of the target resource owner in the token, the identifier of the service API requested by the API invoker in the service API invoke request message being the same as the identifier of the service API requested by the API invoker in the token, the identifier of the service requested by the API invoker in the service API invoke request message being the same as the identifier of the service requested by the API invoker in the token, and the identifier of the service operation requested by the API invoker in the service API invoke request message being the same as the identifier of the service operation requested by the API invoker in the token, then the AEF can send a service API invoke response message to the API invoker if the verification result indicates that the token is valid.

In step 513, in response to the verification result indicating that the token is valid and the information in the service API invoke request message matches the information in the token, the AEF sends a service API invoke response message to the API invoker through the third secure connection.

In the embodiment, the service API invoke response message carries the target resource.

In the above embodiment, the API invoker can obtain the target resource of the target resource owner based on the user authorization, thereby achieving the purpose of enabling user authorization during the API invoking process and having high usability.

Corresponding to the aforementioned method embodiments implemented by using the functions, the present disclosure also provides an apparatus embodiment implemented by using the functions.

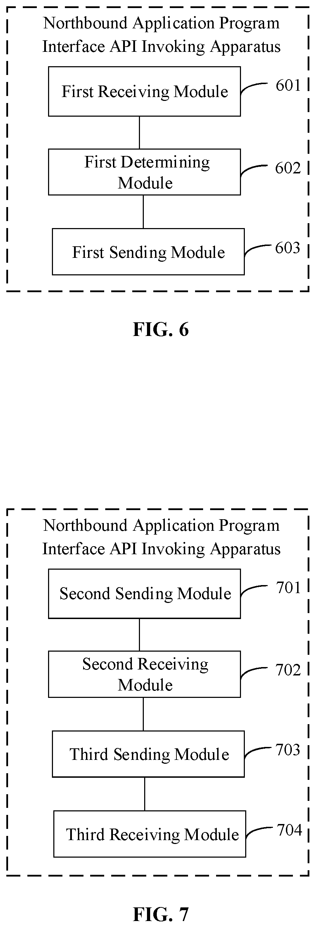

Referring to FIG. 6, FIG. 6 is a block diagram of a northbound application program interface API invoking apparatus according to an exemplary embodiment, wherein the apparatus is applied to a user equipment UE, and includes:
a first receiving module 601, configured to receive an authorization request message sent by a common API framework CAPIF authentication and authorization function for requesting a specified authorization; wherein the specified authorization is an authorization corresponding to a target resource of the UE;
a first determining module 602, configured to determine whether to allow an API invoker to obtain the target resource according to the authorization request message; and
a first sending module 603, configured to send an authorization response message to the CAPIF authentication and authorization function; wherein the authorization response message is used to indicate whether the UE agrees to provide the specified authorization for the API invoker.

Referring to FIG. 7, which is a block diagram of a northbound application program interface API invoking apparatus according to an exemplary embodiment, wherein the apparatus is applied to an API invoker and includes:
a second sending module 701, configured to send an authorization request message to a common API framework CAPIF authentication and authorization function for requesting a specified authorization; wherein the specified authorization is an authorization corresponding to a target resource of a user equipment UE;
a second receiving module 702, configured to receive an authorization response message returned by the CAPIF authentication and authorization function; wherein the authorization response message is used to indicate whether the UE agrees to provide the specified authorization for the API invoker;
a third sending module 703, configured to send, in response to the authorization response message indicating that the UE agrees to provide the specified authorization for the API invoker, a service API invoke request message carrying at least a token to an API exposing function (AEF); wherein the token is used to obtain, modify or set the target resource; and
a third receiving module 704, configured to receive a service API invoke response message returned by the AEF; wherein the target resource is carried by the service API invoke response message.

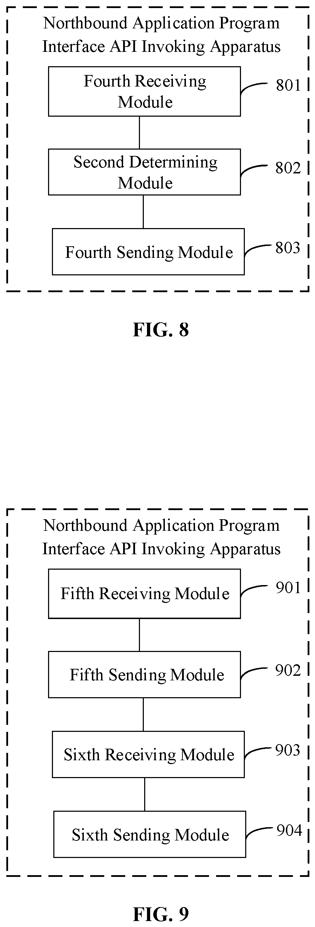

Referring to FIG. 8, which is a block diagram of a northbound application program interface API invoking apparatus according to an exemplary embodiment, wherein the apparatus is applied to an API exposing function entity AEF, and includes:
a fourth receiving module 801, configured to receive, a service API invoke request message sent by an API invoker;
a second determining module 802, configured to determine, in response to a token being carried by the service API invoke request message, a verification result of verifying the token; wherein the token is used to obtain a target resource; and
a fourth sending module 803, configured to send, in response to the verification result indicating that the token is valid and information in the service API invoke request message matches information in the token, a service API invoke response message to the API invoker; wherein the target resource is carried in the service API invoke response message.

Referring to FIG. 9, which is a block diagram of a northbound application program interface API invoking apparatus according to an exemplary embodiment, wherein the apparatus is applied to the common API framework CAPIF authentication and authorization function, and includes:
a fifth receiving module 901, configured to receive an authorization request message sent by an API invoker requesting to obtain a specified authorization; wherein the specified authorization is an authorization corresponding to a target resource of a user equipment UE;
a fifth sending module 902, configured to send the authorization request message to the UE;
a sixth receiving module 903, configured to receive an authorization response message returned by the UE; wherein the authorization response message is used to indicate whether the UE agrees to provide the specified authorization for the API invoker; and
a sixth sending module 904, configured to send the authorization response message to the API invoker.

For the apparatus embodiments, since they basically correspond to the method embodiments, the relevant parts can refer to the partial description of the method embodiments. The device embodiments described above are only schematic, wherein the units described above as separate components may or may not be physically separated, and the components displayed as units may or may not be physical units, that is, they may be located in one place, or they may be distributed on multiple network units. Some or all of the modules may be selected according to actual needs to achieve the purpose of the disclosed solution. Those of ordinary skill in the art may understand and implement it without creative effort.

Correspondingly, the present disclosure further provides a northbound application program interface API invoking apparatus, including:
a processor; and
a memory for storing processor-executable instructions;
wherein, the processor is configured to execute any one of the northbound application program interface API invoking method at the UE side.

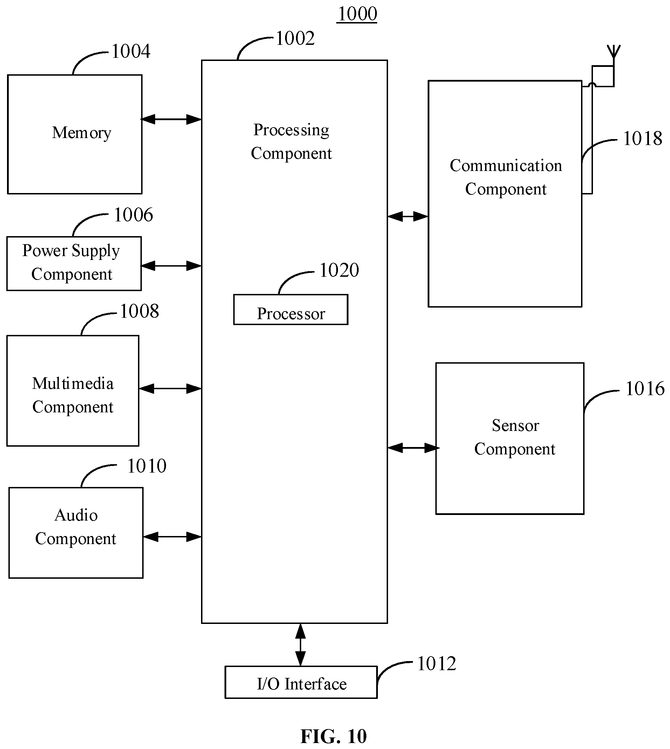

FIG. 10 is a block diagram of a northbound application program interface API invoking apparatus according to an exemplary embodiment. For example, the apparatus 1000 can be a mobile phone, a computer, a digital broadcast terminal, a messaging device, a game console, a tablet device, a medical device, a fitness device, a personal digital assistant, and the like.

Referring to FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1016, and a communication component 1018.

The processing component 1002 generally controls the overall operations of the apparatus 1000, such as operations associated with display, telephone calls, data communications, camera operations, and recording operations. The processing component 1002 may include one or more processors 1020 to execute instructions to complete all or part of the steps of the above method. Additionally, processing component 1002 may include one or more modules that facilitate interaction between processing component 1002 and other components. For example, processing component 1002 may include a multimedia module to facilitate interaction between multimedia component 1008 and processing component 1002.

One of the processors 1020 in the processing component 1002 can be configured to execute any of the above-mentioned northbound application programming interface API invoking method at the terminal device side.

The memory 1004 is configured to store various types of data to support operations at the apparatus 1000. Examples of such data include instructions for any application or method operating on the apparatus 1000, contact data, phonebook data, messages, pictures, videos, etc. The memory 1004 can be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power supply component 1006 provides power to various components of the apparatus 1000. The power component 1006 may include a power management system, one or more power supplies, and other components associated with generating, managing, and distributing power for apparatus 1000.

The multimedia component 1008 includes a screen providing an output interface between the apparatus 1000 and the user. In some embodiments, the screen may include a liquid crystal display (LCD) and a touch panel (TP). In response to the screen including a touch panel, the screen may be implemented as a touch screen to receive input signals from a user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 1008 includes a front camera and/or a rear camera. When the apparatus 1000 is in an operation mode, such as a photographing mode or a video mode, the front camera and/or the rear camera can receive external multimedia data. Each front camera and rear camera can be a fixed optical lens system or have focal length and optical zoom capability.

The audio component 1010 is configured to output and/or input audio signals. For example, the audio component 1010 includes a microphone (MIC), which is configured to receive an external audio signal when the apparatus 1000 is in an operation mode, such as a call mode, a recording mode and a voice recognition mode. Received audio signals may be further stored in memory 1004 or sent via communication component 1018. In some embodiments, the audio component 1010 also includes a speaker for outputting audio signals.

The I/O interface 1012 provides an interface between the processing component 1002 and a peripheral interface module, which may be a keyboard, a click wheel, a button, and the like. These buttons may include, but are not limited to: a home button, volume buttons, start button, and lock button.

The sensor component 1016 includes one or more sensors for providing apparatus 1000 with various aspects of status assessment. For example, the sensor component 1016 can detect the open/closed state of the apparatus 1000, the relative positioning of components, such as the display and the keypad of the apparatus 1000, the sensor component 1016 can also detect the apparatus 1000 or a change in the position of a component of the apparatus 1000, the presence or absence of user's contact with the apparatus 1000, the change of orientation or acceleration/deceleration of the apparatus 1000 and the temperature change of the apparatus 1000. The sensor component 1016 may include a proximity sensor configured to detect the presence of nearby objects in the absence of any physical contact. The sensor component 1016 may also include an optical sensor, such as a CMOS or CCD image sensor, for use in imaging applications. In some embodiments, the sensor component 1016 may also include an acceleration sensor, a gyroscope sensor, a magnetic sensor, a pressure sensor or a temperature sensor.

The communication component 1018 is configured to facilitate wired or wireless communication between the apparatus 1000 and other devices. The apparatus 1000 can access a wireless network based on communication standards, such as Wi-Fi, 3G, 4G, 5G, 6G, or a combination thereof. In an exemplary embodiment, the communication component 1018 receives broadcast signals or broadcast related information from an external broadcast management system via a broadcast channel. In an exemplary embodiment, the communication component 1018 also includes a near field communication (NFC) module to facilitate short-range communication. For example, the NFC module can be implemented based on radio frequency identification (RFID) technology, infrared data association (IrDA) technology, ultra wideband (UWB) technology, Bluetooth (BT) technology and other technologies.

In an exemplary embodiment, apparatus 1000 may be implemented by one or more application specific integrated circuits (ASIC), digital signal processors (DSP), digital signal processing devices (DSPD), programmable logic devices (PLD), field programmable gate array (FPGA), controllers, microcontrollers, microprocessors or other electronic components for performing the method described above.

In an exemplary embodiment, there is also provided a non-transitory computer-readable storage medium including instructions, such as the memory 1004 including instructions, which can be executed by the processor 1020 of the apparatus 1000 to implement the above method. For example, the non-transitory computer readable storage medium may be ROM, random access memory (RAM), CD-ROM, magnetic tape, floppy disk, and optical data storage device, and the like.

Correspondingly, the present disclosure further provides a northbound application program interface API invoking apparatus, including:
a processor; and
a memory for storing processor-executable instructions;
wherein, the processor is configured to execute any one of the northbound application program interface API invoking method at the API invoker side.

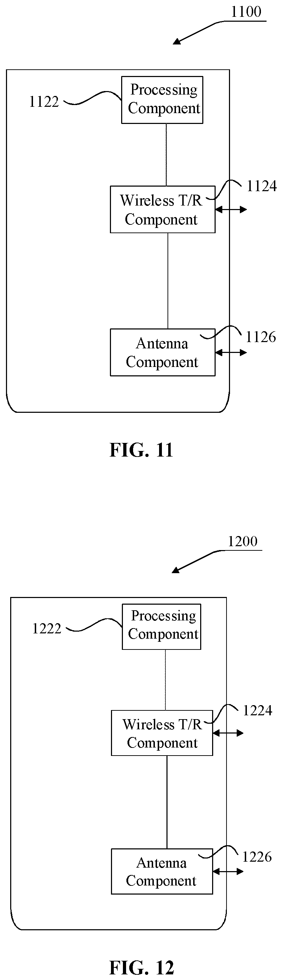

As shown in FIG. 11, FIG. 11 is a schematic diagram of a structure of a northbound application program interface API invoking apparatus 1100 according to an exemplary embodiment. The apparatus 1100 can be provided as an API invoker. Referring to FIG. 11, the apparatus 1100 includes a processing component 1122, a wireless transmission/reception component 1124, an antenna component 1126, and a signal processing part specific to a wireless interface, and the processing component 1122 can further include at least one processor.

One of the processors in the processing component 1122 can be configured to execute any of the northbound application programming interface API invoking method described above on the API invoker side.

Correspondingly, the present disclosure further provides a northbound application program interface API invoking apparatus, including:
a processor; and
a memory for storing processor-executable instructions;
wherein, the processor is configured to execute any one of the northbound application program interface API invoking method at the AEF side.

As shown in FIG. 12, FIG. 12 is a schematic diagram of a structure of a northbound application program interface API invoking apparatus 1200 according to an exemplary embodiment. The apparatus 1200 may be provided as an AEF. Referring to FIG. 12, the apparatus 1200 includes a processing component 1222, a wireless transmission/reception component 1224, an antenna component 1226, and a signal processing part specific to the wireless interface, and the processing component 1222 may further include at least one processor.

One of the processors in the processing component 1222 may be configured to execute any of the northbound application programming interface API invoking methods described above on the AEF side.

Correspondingly, the present disclosure further provides a northbound application program interface API invoking apparatus, including:
a processor; and
a memory for storing processor-executable instructions;
wherein, the processor is configured to execute any one of the northbound application program interface API invoking method at the CAPIF authentication and authorization function side.

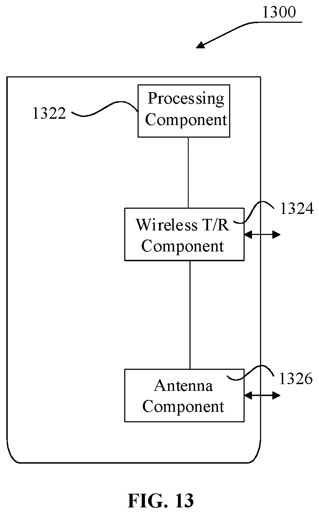

As shown in FIG. 13, FIG. 13 is a schematic diagram of a structure of a northbound application program interface API invoking apparatus 1300 according to an exemplary embodiment. The apparatus 1300 may be provided as a CAPIF authentication and authorization function. Referring to FIG. 13, the apparatus 1300 includes a processing component 1322, a wireless transmission/reception component 1324, an antenna component 1326, and a signal processing part specific to the wireless interface, and the processing component 1322 may further include at least one processor.

One of the processors in the processing component 1322 can be configured to execute any of the northbound application programming interface API invoking methods described above on the CAPIF authentication and authorization function side.

Other embodiments of the disclosure will be readily apparent to those skilled in the art from consideration of the specification and practice of the disclosure disclosed herein. This disclosure is intended to cover any modification, use or adaptation of the present disclosure, these modifications, uses or adaptations follow the general principles of the present disclosure and include common knowledge or conventional technical means in the technical field not disclosed in this disclosure. The specification and examples are to be considered exemplary only, with a true scope and spirit of the disclosure being indicated by the following claims.

It should be understood that the present disclosure is not limited to the precise constructions which have been described above and shown in the accompanying drawings, and various modifications and changes may be made without departing from the scope thereof. The scope of the disclosure is limited only by the appended claims.

## Claims

1. A method for invoking a northbound application program interface (API), executed by a user equipment (UE), and comprising:
receiving an authorization request message sent by a common API framework (CAPIF) authentication and authorization function for requesting a specified authorization; wherein the specified authorization is an authorization corresponding to a target resource of the UE;
determining whether to allow an API invoker to obtain the target resource according to the authorization request message; and
sending an authorization response message to the CAPIF authentication and authorization function; wherein the authorization response message is used to indicate whether the UE agrees to provide the specified authorization for the API invoker.

2. The method according to claim 1, wherein the authorization request message comprises at least one of:
an identifier of the API invoker;
an identifier of a target resource owner;
an identifier of the target resource;
an identifier of a service API requested by the API invoker;
an identifier of a service requested by the API invoker; or
an identifier of a service operation requested by the API invoker.

3. The method according to claim 1, wherein the authorization response message is used to indicate at least one of:
a token type that the UE needs to obtain;
whether the UE agrees to provide the specified authorization for the API invoker;
the UE permanently agrees to provide the specified authorization for the API invoker;
the UE permanently disagrees to provide the specified authorization to the API invoker;
new authorization is required each time the API accesses the target resource;
the UE agrees to provide the specified authorization to the API invoker according to an authorization condition; or
the UE disagrees to provide the specified authorization to the API invoker according to the authorization condition.

4. The method according to claim 3, wherein the authorization condition comprises that the API invoker is in a specified geographic area.

5. The method according to claim 1, further comprising:
performing mutual identity authentication with the CAPIF authentication and authorization function; and
establishing a first secure connection with the CAPIF authentication and authorization function after passing mutual identity authentication with the CAPIF authentication and authorization function.

6. The method according to claim 5, wherein the mutual identity authentication with the CAPIF authentication and authorization function comprises any one of:
performing mutual identity authentication with the CAPIF authentication and authorization function based on a certificate;
performing mutual identity authentication with the CAPIF authentication and authorization function based on a general authentication mechanism (GBA); or
performing mutual identity authentication with the CAPIF authentication and authorization function based on an authentication and key management for applications (AKMA) mechanism.

7. The method according to claim 6, wherein the certificate is allocated to the UE by the CAPIF authentication and authorization function.

8. The method according to claim 5, wherein the receiving the authorization request message sent by the CAPIF authentication and authorization function for requesting the specified authorization comprises:
receiving the authorization request message sent by the CAPIF authentication and authorization function through the first secure connection after establishing the first secure connection with the CAPIF authentication and authorization function.

9. The method according to any one of claims 1 to 8, wherein the UE is a target resource owner; and/or
the CAPIF authentication and authorization function comprises a CAPIF core function or an authorization function.

10. A method for invoking a northbound application program interface (API), executed by an API invoker and comprising:
sending an authorization request message to a common API framework (CAPIF) authentication and authorization function for requesting a specified authorization; wherein the specified authorization is an authorization corresponding to a target resource of a user equipment (UE);
receiving an authorization response message returned by the CAPIF authentication and authorization function; wherein the authorization response message is used to indicate whether the UE agrees to provide the specified authorization for the API invoker;
sending, in response to the authorization response message indicating that the UE agrees to provide the specified authorization for the API invoker, a service API invoke request message carrying at least a token to an API exposing function (AEF); wherein the token is used to obtain, modify or set the target resource; and
receiving a service API invoke response message returned by the AEF; wherein the target resource is carried by the service API invoke response message.

11. The method according to claim 10, further comprising:
determining, in response to determining that the target resource needs to be obtained, whether the API invoker has an authorized token or an authorization code;
executing, in response to having the authorized token, a step of sending the service API invoke request message carrying at least the token to the API exposing function (AEF);
sending, in response to having the authorization code, a first token request message to the CAPIF authentication and authorization function to request the token; wherein the authorization code is carried by the first token request message;
executing the step of sending the service API invoke request message carrying at least the token to the API exposing function (AEF) after receiving a token response message carrying the token returned by the CAPIF authentication and authorization function; and
executing, in response to absence of the authorized token and the authorization code, a step of sending the authorization request message to the common API framework (CAPIF) authentication and authorization function for requesting the specified authorization.

12. The method according to claim 10, wherein the token is carried in the authorization response message.

13. The method according to claim 10, wherein the authorization code is carried in the authorization response message, and the method further comprises:
sending a first token request message to the CAPIF authentication and authorization function requesting to obtain the token; wherein the authorization code is carried in the first token request message; and
receiving a token response message carrying the token returned by the CAPIF authentication and authorization function.

14. The method according to claim 10, wherein the authorization request message comprises at least one of:
an identifier of the API invoker;
an identifier of a target resource owner;
an identifier of the target resource;
an identifier of a service API requested by the API invoker;
an identifier of a service requested by the API invoker; or
an identifier of a service operation requested by the API invoker.

15. The method according to claim 10, wherein the token comprises at least one of:
a token type;
an identifier of the CAPIF authentication and authorization function;
an identifier of the API invoker;
an identifier of an intended service API;
an identifier of a service requested by the API invoker;
an identifier of a service operation requested by the API invoker;
an identifier of the target resource;
an identifier of a target resource owner;
a geographic area of the API invoker when accessing the target resource;
an identifier of the AEF; or
a validity period ending time of the token.

16. The method according to claim 10, wherein the authorization response message is used to indicate at least one of:
a token type that the UE needs to obtain;
whether the UE agrees to provide the specified authorization for the API invoker;
the UE permanently agrees to provide the specified authorization for the API invoker;
the UE permanently disagrees to provide the specified authorization to the API invoker;
new authorization is required each time the API accesses the target resource;
agreeing to provide the specified authorization to the API invoker according to an authorization condition; or
disagreeing to provide the specified authorization to the API invoker according to the authorization condition.

17. The method according to claim 16, wherein the authorization condition comprises that the API invoker is in a specified geographic area.

18. The method according to claim 10, wherein the sending the service API invoke request message carrying at least the token to the API exposing function (AEF) comprises:
sending, in response to the authorization response message carrying a first token whose token type is a refresh token, a second token request message carrying the first token to the CAPIF authentication and authorization function; wherein the second token request message is used to request obtaining a second token whose token type is an access token;
receiving the second token whose token type is the access token returned by the CAPIF authentication and authorization function; and
sending the service API invoke request message carrying at least the second token to the AEF.

19. The method according to claim 10, wherein the sending the service API invoke request message carrying at least the token to the API exposing function (AEF) comprises:
sending, in response to the authorization response message carrying a second token whose token type is an access token, the service API invoke request message carrying at least the second token to the AEF.

20. The method according to claim 10, wherein the service API invoke request message comprises at least one of:
an identifier of the API invoker;
an identifier of a target resource owner;
an identifier of the target resource;
an identifier of a service API requested by the API invoker;
an identifier of a service requested by the API invoker;
an identifier of a service operation requested by the API invoker; or the token.

21. The method according to claim 10, further comprising:
performing mutual identity authentication with the CAPIF authentication and authorization function; and
establishing a second secure connection with the CAPIF authentication and authorization function after passing mutual identity authentication with the CAPIF authentication and authorization function.

22. The method according to claim 21, wherein the performing mutual identity authentication with the CAPIF authentication and authorization function comprises any one of:
performing mutual identity authentication with the CAPIF authentication and authorization function based on a certificate;
performing mutual identity authentication with the CAPIF authentication and authorization function based on a general authentication mechanism (GBA); or
performing mutual identity authentication with the CAPIF authentication and authorization function based on an authentication and key management for applications (AKMA) mechanism.

23. The method according to claim 21, wherein the sending the authorization request message to the common API framework (CAPIF) authentication and authorization function for requesting the specified authorization comprises:
sending the authorization request message to the CAPIF authentication and authorization function through the second secure connection after establishing the second secure connection with the CAPIF authentication and authorization function.

24. The method according to claim 10, further comprising:
performing mutual identity authentication with the AEF; and
establishing a third secure connection with the AEF after passing mutual identity authentication with the AEF.

25. The method according to claim 24, wherein the mutual identity authentication with the AEF comprises any one of:
performing mutual identity authentication with the AEF based on a certificate;
performing mutual identity authentication with the AEF based on a general authentication mechanism (GBA); or
performing mutual identity authentication with the AEF based on an authentication and key management for applications (AKMA) mechanism.

26. The method according to claim 10, wherein the sending the service API invoke request message carrying at least the token to the API exposing function (AEF) comprises:
sending the service API invoke request message to the AEF through the third secure connection after establishing the third secure connection with the AEF.

27. The method according to any one of claims 10 to 26, wherein the API invoker is another UE different from the UE, or the API invoker is an application function (AF).

28. The method according to any one of claims 10 to 26, wherein the UE is a target resource owner; and/or
the CAPIF authentication and authorization function comprises a CAPIF core function or an authorization function.

29. A method for invoking a northbound application program interface (API), executed by an API exposing function entity (AEF), and comprising:
receiving a service API invoke request message sent by an API invoker;
determining, in response to a token being carried by the service API invoke request message, a verification result of verifying the token; wherein the token is used to obtain, modify or set a target resource; and
sending, in response to the verification result indicating that the token is valid and information in the service API invoke request message matches information in the token, a service API invoke response message to the API invoker; wherein the target resource is carried in the service API invoke response message.

30. The method according to claim 29, wherein determining the verification result of verifying the token comprises:
verifying, by the AEF, the token based on a public key of a common API framework (CAPIF) authentication and authorization function to determine the verification result.

31. The method according to claim 29, wherein determining the verification result of verifying the token comprises:
sending the token to a CAPIF authentication and authorization function; and
receiving the verification result of the token returned by the CAPIF authentication and authorization function.

32. The method according to claim 30 or 31, wherein the CAPIF authentication and authorization function comprises a CAPIF core function or an authorization function.

33. The method according to claim 29, further comprising:
terminating an API invoke process in response to the verification result indicating that the token is invalid.

34. The method according to claim 29, further comprising:
sending, in response to the service API invoke request message not carrying the token, a service API invoking rejection message to the API invoker.

35. The method according to claim 29, wherein the service API invoke request message comprises at least one of:
an identifier of the API invoker;
an identifier of a target resource owner;
an identifier of the target resource;
an identifier of a service API requested by the API invoker;
an identifier of a service requested by the API invoker;
an identifier of a service operation requested by the API invoker; or the token.

36. The method according to claim 29, wherein the token comprises at least one of:
a token type;
an identifier of the CAPIF authentication and authorization function;
an identifier of the API invoker;
an identifier of an intended service API;
an identifier of a service requested by the API invoker;
an identifier of a service operation requested by the API invoker;
an identifier of the target resource;
an identifier of a target resource owner;
a geographic area of the API invoker when accessing the target resource;
an identifier of the AEF; or
a validity period ending time of the token.

37. The method according to claim 29, further comprising:
determining that first identity information of the API invoker has been authenticated;
determining that the verification result indicates that the token is valid; and
sending, in response to the authenticated first identity information being identical to an identifier of the API invoker in the token while information in the service API invoke request message not matching information included in the token, a service API invoking rejection message to the API invoker.

38. The method according to claim 29, further comprising:
determining that first identity information of the API invoker has been authenticated; and
in response to the verification result indicating that the token is valid and information in the service API invoke request message matches information in the token, the sending the service API invoke response message to the API invoker, comprising:
in response to the authenticated first identity information being identical to an identifier of the API invoker in the token, the verification result indicating that the token is valid and the information in the service API invoke request message matches the information in the token, sending the service API invoke response message to the API invoker.

39. The method according to claim 29, further comprising:
determining that a token type of the token carried by the service API invoke request message is a second token whose token type is an access token; and
the determining the verification result of verifying the token comprises:
determining a verification result verifying the second token.

40. The method according to claim 29, further comprising:
sending, in response to the token carried in the service API invoke request message comprising a geographic area where the API invoker is located when accessing the target resource, a location request message to the core network device; wherein the location request message is used to request obtaining location information of the API invoker; and
executing, in response to the location information provided by the core network device matching the geographic area included in the token, a step of sending, in response to the verification result indicating that the token is valid and information in the service API invoke request message matches information in the token, the service API invoke response message to the API invoker.

41. The method according to claim 29, further comprising:
performing mutual identity authentication with the API invoker; and
establishing a third secure connection with the API invoker after passing mutual identity authentication with the API invoker.

42. The method according to claim 41, wherein the mutual identity authentication with the API invoker comprises any one of:
performing mutual identity authentication with the API invoker based on a certificate;
performing mutual identity authentication with the API invoker based on a general authentication mechanism (GBA); or
performing mutual identity authentication with the API invoker based on an authentication and key management for applications (AKMA) mechanism.

43. The method according to claim 41, wherein the receiving the service API invoke request message sent by the API invoker comprises:
receiving the service API invoke request message sent by the APIF invoker through the third secure connection after establishing the third secure connection with the API invoker.

44. A method for invoking a northbound application program interface (API), executed by a common API framework (CAPIF) authentication and authorization function, and comprising:
receiving an authorization request message sent by an API invoker requesting to obtain a specified authorization; wherein the specified authorization is an authorization corresponding to a target resource of a user equipment (UE);
sending the authorization request message to the UE;
receiving an authorization response message returned by the UE; wherein the authorization response message is used to indicate whether the UE agrees to provide the specified authorization for the API invoker; and
sending the authorization response message to the API invoker.

45. The method according to claim 44, wherein a token is carried in the authorization response message in response the authorization response message indicating that the UE agrees to provide the specified authorization to the API invoker; wherein the token is used to obtain, modify or set the target resource.

46. The method according to claim 44, wherein an authorization code is carried in the authorization response message in response the authorization response message indicating that the UE agrees to provide the specified authorization to the API invoker; and
the method further comprises:
receiving a first token request message sent by the API invoker to request a token; wherein the authorization code is carried in the first token request message, and the token is used to obtain, modify or set the target resource; and
sending a token response message carrying the token to the API invoker.

47. The method according to claim 44, wherein the authorization request message comprises at least one of:
an identifier of the API invoker;
an identifier of a target resource owner;
an identifier of the target resource;
an identifier of a service API requested by the API invoker;
an identifier of a service requested by the API invoker; or
an identifier of a service operation requested by the API invoker.

48. The method according to claim 45 or 46, wherein the token comprises at least one of:
a token type;
an identifier of the CAPIF authentication and authorization function;
an identifier of the API invoker;
an identifier of an intended service API;
an identifier of a service requested by the API invoker;
an identifier of a service operation requested by the API invoker;
an identifier of the target resource;
an identifier of a target resource owner;
an identifier of the API exposing function (AEF); or
a validity period ending time of the token.

49. The method according to claim 44, wherein the authorization response message is used to indicate at least one of:
a token type that the UE needs to obtain;
whether the UE agrees to provide the specified authorization for the API invoker;
the UE permanently agrees to provide the specified authorization for the API invoker;
the UE permanently disagrees to provide the specified authorization to the API invoker;
new authorization is required each time the API accesses the target resource;
the UE agrees to provide the specified authorization to the API invoker according to an authorization condition; or
the UE disagrees to provide the specified authorization to the API invoker according to the authorization condition.

50. The method according to claim 49, wherein the authorization condition comprises that the API invoker is in a specified geographic area.

51. The method according to claim 49, further comprising:
generating the token that is subject to the authorization response message for the API invoker.

52. The method according to claim 44, further comprising:
receiving, the authorization response message indicating that a token type that the UE needs to obtain is a refresh token, a second token request message sent by the API invoker when the API invoker needs to obtain the target resource; wherein a first token whose token type is a refresh token is carried in the second token request message, and the second token request message is used to request obtaining a second token whose token type is an access token; and
sending the second token whose token type is the access token to the API invoker based on the second token request message.

53. The method according to claim 44, further comprising:
performing mutual identity authentication with the UE; and
establishing a first secure connection with the UE after passing mutual identity authentication with the UE.

54. The method according to claim 53, wherein the performing the mutual identity authentication with the UE comprises:
performing mutual identity authentication with the UE based on a certificate;
performing mutual identity authentication with the UE based on a general authentication mechanism (GBA); or
performing mutual identity authentication with the UE based on an authentication and key management for applications (AKMA) mechanism.

55. The method according to claim 44, wherein the sending the authorization request message to the UE comprises:
sending the authorization request message to the UE through the first secure connection after establishing the first secure connection with the UE.

56. The method according to claim 44, further comprising:
performing mutual identity authentication with the API invoker; and
establishing a second secure connection with the API invoker after passing mutual identity authentication with the API invoker.

57. The method according to claim 56, wherein the mutual identity authentication with the API invoker comprises any one of:
performing mutual identity authentication with the API invoker based on a certificate;
performing mutual identity authentication with the API invoker based on a general authentication mechanism (GBA); or
performing mutual identity authentication with the API invoker based on an authentication and key management for applications (AKMA) mechanism.

58. The method according to claim 56, wherein the receiving the authorization request message sent by the API invoker requesting to obtain the specified authorization comprises:
receiving the authorization request message sent by the API invoker through the second secure connection after establishing the second secure connection with the API invoker.

59. The method according to claim 44, wherein the CAPIF authentication and authorization function comprises a CAPIF core function or an authorization function; and/or
the UE is a target resource owner.

60. A northbound application program interface (API) invoking apparatus, applied to a user equipment (UE), and comprising:
a first receiving module, configured to receive an authorization request message sent by a common API framework (CAPIF) authentication and authorization function for requesting a specified authorization; wherein the specified authorization is an authorization corresponding to a target resource of the UE;
a first determining module, configured to determine whether to allow an API invoker to obtain the target resource according to the authorization request message; and
a first sending module, configured to send an authorization response message to the CAPIF authentication and authorization function; wherein the authorization response message is used to indicate whether the UE agrees to provide the specified authorization for the API invoker.

61. A northbound application program interface (API) invoking apparatus, applied to an API invoker, and comprising:
a second sending module, configured to send an authorization request message to a common API framework (CAPIF) authentication and authorization function for requesting a specified authorization; wherein the specified authorization is an authorization corresponding to a target resource of a user equipment (UE);
a second receiving module, configured to receive an authorization response message returned by the CAPIF authentication and authorization function; wherein the authorization response message is used to indicate whether the UE agrees to provide the specified authorization for the API invoker;
a third sending module configured to send, in response to the authorization response message indicating that the UE agrees to provide the specified authorization for the API invoker, a service API invoke request message carrying at least a token to an API exposing function (AEF); wherein the token is used to obtain, modify or set the target resource; and
a third receiving module, configured to receive a service API invoke response message returned by the AEF; wherein the target resource is carried by the service API invoke response message.

62. A northbound application program interface (API) invoking apparatus, applied to an API exposing function entity (AEF), and comprising:
a fourth receiving module, configured to receive, a service API invoke request message sent by an API invoker;
a second determining module, configured to determine, in response to a token being carried by the service API invoke request message, a verification result of verifying the token; wherein the token is used to obtain, modify or set a target resource; and
a fourth sending module, configured to send, in response to the verification result indicating that the token is valid and information in the service API invoke request message matches information in the token, a service API invoke response message to the API invoker; wherein the target resource is carried in the service API invoke response message.

63. A northbound application program interface (API) invoking apparatus, applied to a common API framework (CAPIF) authentication and authorization function, and comprising:
a fifth receiving module, configured to receive an authorization request message sent by an API invoker requesting to obtain a specified authorization; wherein the specified authorization is an authorization corresponding to a target resource of a user equipment (UE);
a fifth sending module, configured to send the authorization request message to the UE;
a sixth receiving module, configured to receive an authorization response message returned by the UE; wherein the authorization response message is used to indicate whether the UE agrees to provide the specified authorization for the API invoker; and
a sixth sending module, configured to send the authorization response message to the API invoker.

64. A northbound application program interface API invoking apparatus, comprising:
a processor; and
a memory for storing processor-executable instructions;
wherein, the processor is configured to execute the northbound application program interface (API) invoking method according to any one of claims 1 to 9.

65. A northbound application program interface API invoking apparatus, comprising:
a processor; and
a memory for storing processor-executable instructions;
wherein, the processor is configured to execute the northbound application program interface (API) invoking method according to any one of claims 10 to 28.

66. A northbound application program interface API invoking apparatus, comprising:
a processor; and
a memory for storing processor-executable instructions;
wherein, the processor is configured to execute the northbound application program interface (API) invoking method according to any one of claims 29 to 43.

67. A northbound application program interface API invoking apparatus, comprising:
a processor; and
a memory for storing processor-executable instructions;
wherein, the processor is configured to execute the northbound application program interface (API) invoking method according to any one of claims 44 to 59.
